# EUROPEAN PATENT SPECIFICATION

(11) **EP 4 562 692 B1**
(45) Date of publication and mention of the grant of the patent: **28.10.2026**
(21) Application number: 23750595.3
(22) Date of filing: 27.07.2023
(51) Int. Cl.: H01M 4/36, H01M 4/485, H01M 4/58, H01M 10/0525, H01M 10/0569, H01M 10/42, H01M 10/48

(54) **COATED PARTICULATE MATERIAL FOR USE IN AN ELECTRODE OF AN ELECTROCHEMICAL CELL**
BESCHICHTETES TEILCHENFÖRMIGES MATERIAL ZUR VERWENDUNG IN EINER ELEKTRODE EINER ELEKTROCHEMISCHEN ZELLE
MATÉRIAU PARTICULAIRE REVÊTU POUR UNE UTILISATION DANS UNE ÉLECTRODE D'UNE CELLULE ÉLECTROCHIMIQUE

(30) Priority: 27.07.2022 EP 22187151
(43) Date of publication of application: 04.06.2025
(73) Proprietor: BASF SE, 67056 Ludwigshafen am Rhein (DE)
(72) Inventor: JANEK, Jürgen, 35390 Gießen (DE); ZUO, Tong-Tong, 35440 Linden (DE); WALTHER, Felix, 35392 Gießen (DE); HERTLE, Jonas, 35390 Gießen (DE)
(74) Representative: BASF IP Association
(86) International application number: PCT/EP2023/070847
(87) International publication number: WO 2024/023220

(56) References cited:
- JP-A- 2013 041 844
- US-A1- 2010 015 509
- US-B2- 10 170 763
- MANTHIRAM ARUMUGAM ET AL: "A perspective on nickel-rich layered oxide cathodes for lithium-ion batteries", ENERGY STORAGE MATERIALS, vol. 6, 1 January 2017 (2017-01-01), pages 125 - 139, XP093091207, ISSN: 2405-8297, DOI: 10.1016/j.ensm.2016.10.007
- XIE ZHICHENG ET AL: "One-step bulk and surface co-modification of LiNi0.8Co0.15Al0.05O2 cathode material towards excellent long-term cyclability", ELECTROCHIMICA ACTA, ELSEVIER, AMSTERDAM, NL, vol. 379, 9 March 2021 (2021-03-09), XP086530826, ISSN: 0013-4686, [retrieved on 20210309], DOI: 10.1016/J.ELECTACTA.2021.138124

## Description

Described are a coated particulate material for use in an electrode of an electrochemical cell and a process for preparing said coated particulate material, an electrode comprising said coated particulate material, an electrochemical cell comprising said coated particulate material, and a use of said coated particulate material for preparing an electrode for use in an electrochemical cell.

High energy density all-solid-state batteries may be realized through application of a cathode active material having a redox potential of 4 V or more vs. Li⁺/Li (cathode active material of the "4 V class"), so that a high cell voltage is obtainable. However, such cathode active materials may be incompatible with typical sulfur-containing solid electrolyte materials used for all-solid-state batteries, because the cathode active material may act as an oxidizing agent towards the solid electrolyte present in the cathode and/or in the separator layer. Interfacial reactions of the cathode active material with a solid electrolyte containing sulfide or thiophosphate are considered to be one of the main reasons for rapid capacity loss and poor long-term stability of such all-solid-state batteries.

The interfacial reaction of common cathode active materials (for details see below) and solid electrolytes containing sulfur (e.g. in the form of a sulfide or a thiophosphate) can be assigned to (at least) two mechanisms: (i) electrochemical decomposition processes of the solid electrolyte mainly due to the narrow electrochemical stability window of such compounds, and (ii) oxygen-involving degradation processes that can lead to gas evolution (e.g., of SO₂) and to the formation of oxygenated sulfur species and (in the case of a thiophosphate electrolyte) oxygenated phosphorus species in the interfacial region. The oxygen source for the latter is the cathode active material itself, leading to structural changes of the cathode active material surface (e.g., the formation of a rock-salt-like phase), which in turn impedes lithium-ion transfer between the cathode active material and the solid electrolyte.

To solve this problem, it was proposed to apply a coating to the cathode active material which serves as a protection layer protecting the solid electrolyte from being oxidized by the cathode active material, without inhibiting the transfer of lithium-ions between the cathode active material and the solid electrolyte.

Xie at al. (Electrochimica Acta 379 (2021) 138124) discloses that in order to improve the cycling stability of nickel-rich LiNi_{0.8}Co_{0.15}Al_{0.05}O₂ (NCA) cathode material for lithium-ion battery applications, a sulfur-modified NCA cathode material with bulk and surface co-modification is prepared by sol-gel method through addition of a very small amount of lithium sulfide (Li₂S) as the sulfur-containing additive, and characterized in comparison with the pristine NCA material. Physical characterizations reveal that during the calcination process, some of the introduced S²⁻ enter the layered oxide lattice to replace oxygen, while some of the introduced S²⁻ are oxidized into a thin layer of Li₂SO₄ coated on the surface of the primary nanoparticles of the layered oxide. For convenience, the prepared pristine NCA and S-modified NCA materials are simply denoted as NCA and S-NCA, respectively. As determined by EDS (energy dispersive X-ray spectroscope) mapping (see figure 3e), the Ni, Co, Al, O and S elements are distributed uniformly in the S-NCA sample.

US 2010/0015509 A1 discloses an active material for a battery, said active material comprising a lithium titanium composite oxide particle and a coating layer formed on at least a part of the surface of the particle, the coating layer being contained at least one element selected from the group consisting of phosphorous and sulfur or a phosphorous compound or a sulfur compound.

WO 2020/249659 A1 discloses a coated particulate material for use as electrode active material in an electrode and/or in a solid-state lithium-ion electrochemical cell, said coated particulate material comprising a plurality of core particles, each core particle comprising at least one nickel-containing complex layered oxide, and disposed on the surfaces of the core particles, a coating comprising carbonate ions, lithium and at least one member of the group consisting of aluminium, boron, niobium, phosphorus, silicon, tantalum, titanium, zinc, zirconium and mixtures thereof. WO 2020/249659 A1 also discloses an electrode for use in a solid-state or lithium-ion electrochemical cell and a respective electrochemical cell, said electrode comprising said coated particulate material. Said coating comprises carbonate anions, lithium and at least one member of the group consisting of aluminium, boron, niobium, phosphorus, silicon, tantalum, titanium, zinc, zirconium and mixtures thereof.

Nevertheless, there is an ongoing need for reducing the capacity loss during cycling of an all-solid-state battery, and accordingly a need for cathode active materials having a coating which serves as a protection layer protecting the solid electrolyte from being oxidized by the cathode active material, without inhibiting the transfer of lithium-ions between the cathode active material and the solid electrolyte. Moreover, it is desirable that said coating prevents structural changes of the cathode active material due to interfacial reactions with the solid electrolyte involving oxygen release from the cathode active material.

According to a first aspect, there is provided a coated particulate material comprising
C1) a plurality of core particles, each core particle comprising one or more compounds of formula (I):

   Li₁₊ₜ[NiₓCo_{y}Mn_{z}Mᵤ]₁₋ₜO₂ (I)

   wherein$0 \leq x \leq 1$$0 \leq y \leq 1$$0 \leq z \leq 1$$0 \leq u \leq 0.15$ $x + y + z > 0$ $x + y + z + u = 1$$0 \leq t \leq 0.2$ M if present is one or more elements selected from the group consisting of Al, Mg, Ba, B, and transition metals other than Ni, Co, and Mn,
   and
C2) disposed on the surfaces of the core particles, a coating comprising
   - lithium cations, and
   - oxygenated sulfur species.

Surprisingly it has been found that for an all-solid-state battery the capacity loss is reduced and the long-term stability is improved when a cathode active material in the form of a coated particulate material according to the above-defined first aspect is used. The coating C2) of the coated particulate material comprises oxygenated sulfur species which are inevitably formed by interfacial reactions between the cathode active material and a solid electrolyte containing sulfide, halosulfide, thiophosphate or halothiophosphate. However, different from such uncontrolled degradation processes, during formation of the coated particulate material according to the present invention, said reactions are initiated and allowed to proceed in a controlled manner prior to cell assembly (for details see the description of the process for preparing said coated particulate material).

A coating C2) as defined above may help to enhance the performance of all-solid-state batteries which contain a solid electrolyte containing sulfide, halosulfide, thiophosphate or halothiophosphate, since the strong reaction tendency for forming oxygenated species of sulfur and - if present - phosphorus at the cathode active material surface is satisfied well before cell assembly and operation. The formed oxygenated species of sulfur and - if present - phosphorus (mainly lithium sulfates and lithium phosphates) are considered to be stable against further oxidation during cell operation. Thus, it is assumed that during cell cycling the structural changes of the cathode active material due to interfacial reactions involving oxygen release which are considered as one of the main causes for the decrease of cell performance during cell operation can be minimized or prevented.

Compounds of formula (I) are capable of acting as a cathode active material in an electrochemical cell. In the context of the present disclosure, the electrode of an electrochemical cell at which a net positive charge occurs when the cell is discharged is called the cathode, and the component of the cathode by reduction of which said net positive charge is generated is referred to as a "cathode active material".

Preferably, each core particle C1) consists of at least one compound of formula (I).

Preferred cathode active materials are those having a redox potential of 4 V or more vs. Li⁺/Li (cathode active materials of the "4 V class"), which enable obtaining a high cell voltage. Many such cathode active materials are known in the art.

Suitable cathode active materials are oxides comprising lithium, and one or more members of the group consisting of nickel, cobalt and manganese.

According to the invention, the cathode active material present in the core particles C1) of the coated particulate material is selected from the group consisting of materials having a composition according to general formula (I)

Li₁₊ₜ[NiₓCo_{y}Mn_{z}Mᵤ]₁₋ₜO₂ (I)

wherein$0 \leq x \leq 1$$0 \leq y \leq 1$$0 \leq z \leq 1$$0 \leq u \leq 0.15$ M if present is one or more elements selected from the group consisting of Al, Mg, Ba, B, and transition metals other than Ni, Co, and Mn, $x + y + z > 0$ $x + y + z + u = 1$$0 \leq t \leq 0.2$

In certain cathode active materials according to formula (I), M may be one of Al, Mg, Ti, Mo, Nb, W and Zr. Exemplary cathode active materials of formula (I) are Li₁₊ₜ[Ni_{0.88}Co_{0.08}Al_{0.04}]₁₋ₜO₂, Li₁₊ₜ[Ni_{0.905}Co_{0.0475}Al_{0.0475}]₁₋ₜO₂, and Li₁₊ₜ[Ni_{0.91}Co_{0.045}Al_{0.045}]₁₋ₜO₂, wherein in each case 0 ≤ t ≤ 0.2.

Suitable cathode active materials are e.g., oxides comprising lithium and one or more members of the group consisting of nickel, cobalt and manganese. Those cathode active materials have a composition according to general formula (la):

Li₁₊ₜ[NiₓCo_{y}Mn_{z}]₁₋ₜO₂ (Ia)

wherein$0 \leq x \leq 1$$0 \leq y \leq 1$$0 \leq z \leq 1$ $x + y + z = 1$ $0 \leq t \leq 0.2$

Exemplary cathode active materials according to formula (la) are LiCoO₂, Li₁₊ₜ[Ni_{0.85}Co_{0.10}Mn_{0.05}]₁₋ₜO₂, Li₁₊ₜ[Ni_{0.87}Co_{0.05}Mn_{0.08}]₁₋ₜO₂, Li₁₊ₜ[Ni_{0.83}Co_{0.12}Mn_{0.05}]₁₋ₜO₂, and Li₁₊ₜ[Ni_{0.6}Co_{0.2}Mn_{0.2}]₁₋ₜO₂, wherein in each case 0 ≤ t ≤ 0.2.

Preferably, the cathode active material according to general formula (Ia) is a mixed oxide of lithium and at least one of nickel, cobalt and manganese. More preferably, the cathode active material is a mixed oxide of lithium, nickel and one or both members of the group consisting of cobalt and manganese.

Certain suitable cathode active materials are mixed oxides comprising
- lithium,
- nickel and
- one or both members of the group consisting of cobalt and manganese.

Exemplary suitable cathode active materials have a composition according to general formula (lb):

Li₁₊ₜA₁₋ₜO₂ (Ib),

wherein$0 \leq t \leq 0.2$

A comprises nickel
and one or both members of the group consisting of cobalt and manganese,
and optionally
   - one or more further transition metals not selected from the group consisting of nickel, cobalt and manganese, wherein said further transition metals are preferably selected from the group consisting of molybdenum, titanium, tungsten, zirconium,
   - one or more elements selected from the group consisting of aluminum, barium, boron and magnesium,
wherein at least 50 mole-% of the transition metal of A is nickel.

Suitable cathode active materials having a composition according to formula (Ib) are described e.g. in WO 2020/249659 A1.

The cathode active material having a composition according to general formula (I), especially according to general formula (Ib), may have a layered structure or a spinel structure. Cathode active materials having a composition according to general formula (Ib) which have a layered structure as described in WO 2020/249659 A1 may be preferable in some cases.

Certain preferred cathode active materials have a composition according to general formula (Ic)

Li₁₊ₜ[Ni_{1-u-v-w}CoᵤMnᵥM_{w}]₁₋ₜO₂ (Ic)

wherein
- M: is a member of the group consisting of aluminum, barium, boron, magnesium, molybdenum, titanium, tungsten, zirconium, and mixtures of at least two of the foregoing elements, preferably M is or comprises aluminum (most preferably when v is 0),
$0 \leq t \leq 0.2$$0.04 \leq u \leq 0.2$$0 \leq v \leq 0.2$preferably 0.04 ≤ v ≤ 0.2 $0 \leq w \leq 0.1$ and (u + v + w) is ≤ 0.4 and preferably is ≤ 0.3.

In formula (Ic), the variable "M" can stand for any individual member of the group of elements as defined above (e.g. "M" can stand for tungsten, i.e. "W") or it can stand for two or more members of the group of elements as defined above (e.g. the "M" can stand for a group consisting of aluminium, tungsten, zirconium and titanium). Where "M" stands for two or more members of the group of elements as defined above, the index (number) "w" accompanying the variable "M" applies to the total of elements represented by "M", as defined above.

Exemplary cathode active materials of formula (Ic) are Li₁₊ₜ[Ni_{0.85}Co_{0.10}Mn_{0.05}]₁₋ₜO₂, Li₁₊ₜ[Ni_{0.87}Co_{0.05}Mn_{0.08}]₁₋ₜO₂, Li₁₊ₜ[Ni_{0.83}Co_{0.12} Mn_{0.05}]₁₋ₜO₂, Li₁₊ₜ[Ni_{0.6}Co_{0.2}Mn_{0.2}]₁₋ₜO₂, Li₁₊ₜ[Ni_{0.88}Co_{0.08}Al_{0.04}]₁₋ₜO₂, Li₁₊ₜ[Ni_{0.905}Co_{0.0475}Al_{0.0475}]₁₋ₜO₂, and Li₁₊ₜ[Ni_{0.91}Co_{0.045}Al_{0.045}]₁₋ₜO₂, wherein in each case 0 ≤ t ≤ 0.2.

In the coated particulate material as described herein, the coating C2) comprises at least the following constituents:
- lithium cations, and
- oxygenated sulfur species.

In the coating C2), said oxygenated sulfur species may be oxidation products of one or more compounds of the formula (II)

(Li₂S)ₐ(P₂S₅)_{b}(LiX)_{c}(Q_{2/e}S)_{d} (II)

wherein
X corresponds to one or more selected from the group consisting of F, Cl, Br and I, and pseudohalides,
Q corresponds to one or more elements selected from the group consisting of metals different from Li and metalloids, wherein Q is preferably selected from the group consisting of B, Al, Si, Ge, Sn, Sb, Zr, Ga, Z and Mg
e is the oxidation number of Q
$0 \leq a \leq 1 ,$ preferably 0 ≤ a ≤ 0.98
$0 \leq b < 1 ,$preferably 0 ≤ b < 0.98
$0 \leq c < 1 ,$preferably 0 ≤ c < 0.98
$0 \leq d < 1 ,$preferably 0 ≤ d < 0.98$a + b + c + d = 1$
with the proviso that when a = 0,
   c is > 0, preferably ≥ 0.02
   and one of b and d is > 0, preferably ≥ 0.02.

Preferably, in formula (II) a < 1, preferably a ≤ 0.98.

Preferably, in formula (II) at least one of b, c and d is > 0, preferably at least one of b, c and d is ≥ 0.02.

Formula (II) as defined above is construed to define the molar ratio of Li₂S : P₂S₅ : LiX : Q_{2/e}S normalized to a total molar amount of Li₂S, P₂S_{5,} LiX, and Q_{2/e}S of 1. Thus, formula (II) is different from a gross formula which defines the molar ratio of the elements (in the present case Li, S, P, X and Q) usually by means of subscripts which are integer numbers.

In formula (II), Q corresponds to one or more elements selected from the group consisting of (i) metals different from Li and (ii) metalloids. The term "metals" as used herein includes transition metals. Q is preferably selected from the group consisting of B, Al, Si, Ge, Sn, Sb, Zr, Ga, Zn and Mg. Within this group, Al, Sn, Zr, Ga, Zn and Mg belong to the metals, while B, Si, Ge and Sb belong to the metalloids. In certain cases, Q is selected from the group consisting of (i) metals different from Li and (ii) B, Si, Be and Sb.

In formula (II), X corresponds to one or more selected from the group consisting of F, Cl, Br and I, and pseudohalides. Preferably, X is Cl.

As used herein, the term "pseudohalides" denotes monovalent anions, which resemble halide anions with regard to their chemistry, and therefore can replace halide anions in a chemical compound without substantially changing the properties of such compound. The term "pseudohalide ion" is known in the art, cf. the IUPAC Gold book. Examples of pseudohalide ions are N₃⁻, SCN⁻, CN⁻, OCN⁻, BF⁻ and BH⁻. In case the pseudohalide contains elements from the group consisting of B and/or S, such content of B resp. S is not considered in the above-defined parameters a, b and d of general formula (II). In contrast, the total amount of halides and pseudohalides is indicated by the parameter "c" of general formula (II). In pseudohalide-containing compositions of general formula (II) the pseudohalide is preferably selected from the group consisting of SCN⁻, BF⁻ and BH⁻.

The coating C2) is obtainable by oxidizing a compound of formula (II) as defined above. Accordingly, a compound of formula (II) as defined above may serve as a precursor for a coating C2) as defined above.

Preferably, the compound of formula (II) is selected from the group consisting of
lithium sulfide,
lithium halosulfides,
lithium thiophosphates,
lithium halothiophosphates,
lithium sulfide modified with one or more sulfides of elements Q selected from the group consisting of metals different from Li and metalloids,
lithium halosulfides modified with one or more sulfides of elements Q selected from the group consisting of metals different from Li and metalloids,
lithium thiophosphates modified with one or more sulfides of elements Q selected from the group consisting of metals different from Li and metalloids,
and lithium halothiophosphates modified with one or more sulfides of elements Q selected from the group consisting of metals different from Li and metalloids.

When the compound of formula (II) is lithium sulfide, a = 1 and b = c = d = 0.

In certain cases it is preferred that compound of formula (II) is not lithium sulfide.

When the compound of formula (II) is selected from the group consisting of lithium thiophosphates, c = d = 0 and a + b = 1.

When the compound of formula (II) is selected from the group consisting of lithium halosulfides, b = d = 0 and a + c =1.

When the compound of formula (II) is selected from the group consisting of lithium halothiophosphates, d = 0 and a + b + c =1.

When the compound of formula (II) is selected from the group consisting of lithium sulfides modified with one or more sulfides of elements Q selected from the group consisting of metals different from Li and metalloids, b = c = 0 and a + d = 1.

When the compound of formula (II) is selected from the group consisting of lithium halosulfides modified with one or more sulfides of elements Q selected from the group consisting of metals different from Li and metalloids, b = 0 and a + c + d = 1.

When the compound of formula (II) is selected from the group consisting of lithium thiophosphates modified with one or more sulfides of elements Q selected from the group consisting of metals different from Li and metalloids c = 0 and a + b + d = 1.

When the compound of formula (II) is selected from the group consisting of lithium halothiophosphates modified with one or more sulfides of elements Q selected from the group consisting of metals different from Li and metalloids, a + b + c + d =1.

Preferred compounds of formula (II) are those selected from the group consisting of thiophosphates and halothiophosphates.

Preferably, said oxygenated sulfur species comprise sulfate anions. In the coating C2), sulfate anions may be detected by X-ray photoelectron spectroscopy (XPS) or by vibrational spectroscopy, i.e., infrared (IR) spectroscopy and Raman spectroscopy. At least a part of the sulfate anions present in the coating C2), preferably the total amount of sulfate ions present in the coating C2), is present as lithium sulfate Li₂SO₄.

In certain cases, said coating C2) further comprises oxygenated phosphorus species. In such coating C2), said oxygenated phosphorus species may be oxidation products of one or more compounds of the formula (II) as defined above wherein b > 0, preferably b ≥ 0.02. Thus, such coating C2) comprising oxygenated phosphorus species is obtainable by oxidizing a compound of formula (II) as defined above wherein b > 0, preferably b ≥ 0.02. Accordingly, a compound of formula (II) as defined above wherein b > 0, preferably b ≥ 0.02, may serve as a precursor for a coating C2) which comprises oxygenated phosphorus species.

Herein, the compound of formula (II) is preferably selected from the group consisting of
lithium thiophosphates as defined above,
lithium halothiophosphates as defined above,
lithium thiophosphates modified with one or more sulfides of elements Q selected from the group consisting of metals different from Li and metalloids, as defined above
and lithium halothiophosphates modified one or more sulfides of elements Q selected from the group consisting of metals different from Li and metalloids, as defined above.

Preferably, said oxygenated phosphorus species comprise phosphate anions. In the coating C2), phosphate anions may be detected by X-ray photoelectron spectroscopy (XPS) or by vibrational spectroscopy, i.e., infrared (IR) spectroscopy and Raman spectroscopy. At least a part of the phosphate anions present in the coating C2), preferably the total amount of phosphate ions present in the coating C2), is present as lithium sulfate Li₃PO₄.

In certain preferred cases, the oxygenated sulfur species present in the coating C2) comprise sulfate anions, and the oxygenated phosphorus species present in the coating C2) comprise phosphate anions. In the coating C2), sulfate anions and phosphate anions may be detected by X-ray photoelectron spectroscopy (XPS) or by vibrational spectroscopy, i.e., infrared (IR) spectroscopy and Raman spectroscopy. At least a part of the sulfate anions present in the coating C2), preferably the total amount of sulfate ions present in the coating C2), is present as lithium sulfate Li₂SO₄; and at least a part of the phosphate anions present in the coating C2), preferably the total amount of phosphate ions present in the coating C2), is present as lithium sulfate Li₃PO₄. Accordingly, in certain cases the coating C2) comprises Li₂SO₄ and Li₃PO₄.

Li₃PO₄ and Li₂SO₄ are known to have an appropriate ionic conductivity for lithium-ions. Thus, the presence of these compounds at the surface of the cathode active material is not detrimental for the cell performance.

In a coated particulate material as defined above, the fraction of sulfur relative to the total mass of the plurality of core particles C1) and their coatings C2) may be in the range of from 0.09 % to 10.0 %, preferably 0.4 % to 4.0 %, as detected by inductively coupled plasma optical emission spectrometry (ICP-OES).

In certain cases, the sulfur as detected by inductively coupled plasma optical emission spectrometry (ICP-OES) may include minor amounts of sulfur present in the core particles C1) which originate from impurities of the cathode active material. Whether such impurities are present or not depends on the educts used for preparing the cathode active material. If present, the content of sulfur in the core particles C1) is typically in the range of 0.04 to 0.08 wt.-%, as determined by elemental analysis.

Preferably, in the core particles C1) of the coated particulate material disclosed herein, the concentration of sulfur is 10 % or less, preferably 1 % or less, most preferably 0.1% or less of the concentration of sulfur in the coating C2).

In a coated particulate material as defined above wherein said coating C2) further comprises oxygenated phosphorus species, the fraction of phosphorus relative to the total mass of the plurality of core particles C1) and their coatings C2) may be in the range of from 0.01 % to 10.0 %, preferably 0.05 % to 4.0 %, as detected by inductively coupled plasma optical emission spectrometry (ICP-OES).

In certain preferred cases, in a coated particulate material as defined above
- the fraction of sulfur is in the range of from 0.09 % to 10.0 %, preferably 0.4 % to 4.0 %, as detected by inductively coupled plasma optical emission spectrometry
   and
- the fraction of phosphorus is in the range of from 0.01 % to 10.0 %, preferably 0.05 % to 4.0 % as detected by inductively coupled plasma optical emission spectrometry
in each case relative to the total mass of the plurality of core particles C1) and their coatings C2).

In a coated particulate material as defined above, the fraction of sulfate anions is preferably in the range of from 0.27 % to 30.0 %, preferably 1.2 % to 12.0 % relative to the total mass of the plurality of core particles C1) and their coatings C2).

In a coated particulate material as defined above wherein said coating C2) further comprises oxygenated phosphorus species, the fraction of phosphate anions is preferably in the range of from 0.03 % to 33.7 %, preferably 0.15 % to 12.3 %, relative to the total mass of the plurality of core particles C1) and their coatings C2).

In certain preferred cases, in a coated particulate material as defined above
- the fraction of sulfate anions is in the range of from 0.27 % to 30.0 %, preferably 1.2 % to 12.0 %
- the fraction of phosphate anions is in the range of from 0.03 % to 33.7 %, preferably 0.15 % to 12.3 %
in each case relative to the total mass of the plurality of core particles C1) and their coatings C2).

In a coated particulate material as defined above, said coating may comprise one or more further constituents.

In certain cases, the coating C2) comprises halide anions. At least a part of the halide anions, preferably the total amount of halide anions in the coating is present as lithium halide. In such coating C2), said halide anions may origin from one or more compounds of the formula (II) as defined above wherein c > 0, preferably c ≥ 0.02. Thus, such coating C2) comprising halide anions is obtainable by oxidizing a compound of formula (II) as defined above wherein c > 0, preferably c ≥ 0.02. Accordingly, a compound of formula (II) as defined above wherein c > 0, preferably ≥ 0.02, may serve as a precursor for a coating C2) which comprises halide anions. Said halide anions are selected from the group consisting of F⁻, Cl⁻, Br and I⁻, preferably Cl⁻.

In certain cases, the coating C2) comprises carbonate anions. At least a part of the carbonate anions, preferably the total amount of carbonate anions in the coating is present as lithium carbonate.

In the coated particulate material according to the first aspect described herein, the coating C2) may comprise carbonate anions in a total amount of ≥ 0.08 mass-% relative to the total mass of the plurality of (uncoated) core particles C1). More specifically, the coating C2) may comprise carbonate anions in a total amount in the range of from 0.08 mass-% to 1.62 mass-%, preferably of from 0.12 mass-% to 1.22 mass-%, more preferably of from 0.16 mass-% to 0.81 mass-%, relative to the total mass of the plurality of (uncoated) core particles C1) and their coatings C2). If the content of lithium carbonate in the coating C2) is too high, the lithium-ion conductivity may be decreased.

Without wishing to be bound by any theory, it is presently assumed that the carbonate present on the surface of the core particles C1) originates from unavoidable impurities of the cathode active material which may be formed when the cathode active material is prepared or stored in the presence of traces of carbon dioxide and humidity, and/or in certain cases from using lithium carbonate as a precursor for the synthesis of the cathode active material, and/or from the decomposition of the organic solvent or carrier liquid of the liquid reaction mixture used in preparing the coated particulate material (for details see below) in air resp. oxygen and reactivity with residual lithium on the particle surface of the cathode active material.

In the coated particulate material according to the first aspect described herein, at least a part of the carbonate ions present in the coating C2) may be present as part of an ionic compound, e.g. as part of a salt.

For the purposes of the present disclosure, the amount of carbonate ions present in the coating C2) may be determined by acid titration, coupled with mass spectroscopy, more preferably according to the method as defined in the examples section of WO 2020/249659 A1 performed on a (representative) sample of the coated particulate material.

In certain cases, the coating C2) comprises anions selected from the group consisting of oxide anions, hydroxide anions and peroxide anions. At least a part of said anions, preferably the total amount of said anions in the coating is present as one or more of lithium oxide Li₂O, lithium hydroxide LiOH and lithium peroxide Li₂O₂.

In certain specific cases, the coating C2) comprises oxoanions of elements from the group consisting of metals different from Li and metalloids. The term "metals" as used herein includes transition metals. At least a part of the oxoanions, preferably the total amount of oxoanions in the coating is present as a mixed oxide of lithium and said one or more elements from the group consisting of metals different from Li and metalloids (e.g. a ternary oxide). In such coating C2), said oxoanions may origin from one or more compounds of formula (II) as defined above wherein d > 0 preferably d ≥ 0.02. Thus, such coating C2) comprising said oxoanions is obtainable by oxidizing a compound of formula (II) as defined above wherein d > 0, preferably d ≥ 0.02. Accordingly, a compound of formula (II) as defined above wherein d > 0, preferably d ≥ 0.02, may serve as a precursor for a coating C2) which comprises oxoanions.

In the coated particulate material as described herein, the coating C2) is disposed on the surfaces of at least a part of the core particles C1), preferably the coating C2) is disposed on the surfaces of > 50 % of the total number of core particles C1), more preferably on the surfaces of ≥ 75 % of the total number of core particles C1), even more preferably on the surfaces of ≥ 90 % of the total number of core particles C1) and yet even more preferably on the surfaces of ≥ 95 % of the total number of core particles C1) present in the coated particulate material. For the purposes of the present disclosure, the part of the core particles C1) on whose surfaces the coating C2) is disposed can be determined by low-energy ion scattering (LEIS) or electron microscopy performed on a (representative) sample of the coated particulate material. LEIS gives a reliable quantitative determination of the degree of coverage of a coating even when the coating is not visible by SEM.

In the coated particulate material as described herein, the coating C2) is disposed on at least a part of the surface of a (an individual) core particle C1), preferably the coating C2) is disposed on > 50 % of the total surface of a core particle C1), more preferably on ≥ 75 % of the total surface of a core particle C1) and even more preferably on ≥ 90 % of the total surface of a core particle C1). For the purposes of the present disclosure, the part of the surface of a core particle C1) on which the coating C2) is disposed can be determined by low-energy ion scattering (LEIS) or electron microscopy performed on a (representative) sample of an (individual) coated particle of the coated particulate material or a (representative) sample of the coated particulate material.

A coated particulate material as disclosed herein may comprise a plurality of secondary particles each comprising a plurality of primary particles in the form of cores C1) wherein said plurality of primary particles is surrounded by a coating C2). The surfaces of individual primary particles inside such secondary particles may not have a coating, because in the process for preparing a coated particulate material according to a second aspect descorbed herein (for details see below) such primary particles encapsulated inside a secondary particle do not get in contact with the compound of formula (II) as defined above. In contrast, in secondary particles of the cathode active material described by Xie at al. (Electrochimica Acta 379 (2021) 138124)), substantially all primary particles have a sulfur-containing coating on their surface, even when agglomerated within secondary particles (cf. Scheme 1 of Electrochimica Acta 379 (2021) 138124). This is due to the preparation by a sol-gel process involving in-situ formation of the particles of the cathode active material in the presence of Li₂S.

According to a second aspect, there is provided a process for preparing a coated particulate material according to the first aspect as described above. Said process comprises the steps
P1) preparing or providing a plurality of core particles C1) as defined above,
P2) preparing or providing one or more compounds of formula (II) as defined above,
P3) contacting the materials prepared or provided in steps P1) and P2) with each other, so that a coated particulate precursor material results, said coated particulate precursor material comprising
   CP1) a plurality of core particles C1) as defined above
      and
   CP2) disposed on the surfaces of the core particles, a coating comprising one or more compounds of formula (II) as defined above
P4) heat-treating the coated particulate precursor material resulting from step P3) under an oxidizing atmosphere at a temperature in the range of from 100 °C to 700 °C, so that a coated particulate material according to the above-defined first aspect results.

It is understood that the process according to the second aspect as described herein is not a sol-gel process as described by Xie at al. (Electrochimica Acta 379 (2021) 138124). Different from the process described by Xie at al. the process according to the second aspect as described herein does not involve substantial bulk modification of the cathode active material, and results in a coated particulate material having a structure different from the sulfur-modified NCA cathode active materials disclosed by Xie at al. (see above). Under the conditions of the process according to the second aspect as described herein, there is substantially no diffusion of sulfur into the core particles C1). This can be verified by SEM-EDX (scanning electron microscopy combined with energy dispersive X-ray spectroscope of the coated particulate material) or by TEM-EDX (transmission electron microscopy combined with energy dispersive X-ray spectroscope of the coated particulate material). Here, SEM-EDX resp. TEM-EDX means that from a coated particle identified by means of SEM resp. TEM a cross section is obtained by means of a focused ion beam, and the concentration of sulfur in the exposed core is determined by means of EDX. It was found that the concentration of sulfur in the exposed core is close to the detection limit.

Preferably, in the core particles C1) of the coated particulate material obtained by the process according to the second aspect disclosed herein, the concentration of sulfur is 10 % or less, preferably 1 % or less, most preferably 0.1% or less of the concentration of sulfur in the coating C2).

Methods for preparing core particles C1) comprising at least one cathode active material (step P1)), preferably core particles C1) consisting of at least one cathode active material, are known in the art. Core particles C1) comprising or consisting of at least one cathode active material are commercially available. Regarding preferred and specific cathode active materials, reference is made to the disclosure provided above in the context of the coated particulate material according to the first aspect. For the sake of reducing the amount of residual surface carbonates, step P1) may include a heat treatment of the core particles C1). Heat treatment of the core particles C1) may be performed at a temperature in the range of from 700°C to 800 °C. Heat treatment of the core particles C1) may be performed in the presence of an oxygen flow.

Methods for preparing compounds of formula (II) as defined above (step P2)) are known in the art. Regarding preferred and specific compounds of formula (II), reference is made to the disclosure provided above in the context of the coated particulate material according to the first aspect. Accordingly, the compounds of formula (II) as prepared or provided in step P2) are preferably selected from the group consisting of
lithium sulfide,
lithium halosulfides,
lithium thiophosphates,
lithium halothiophosphates,
lithium sulfide modified with one or more sulfides of elements Q selected from the group consisting of metals different from Li and metalloids
lithium halosulfides modified with one or more sulfides of elements Q selected from the group consisting of metals different from Li and metalloids,
lithium thiophosphates modified with one or more sulfides of elements Q selected from the group consisting of metals different from Li and metalloids
and lithium halothiophosphates modified with one or more sulfides of elements Q selected from the group consisting of metals different from Li and metalloids.

When the compound of formula (II) is lithium sulfide, a = 1 and b = c = d = 0.

In certain cases it is preferred that compound of formula (II) is not lithium sulfide.

When the compound of formula (II) is selected from the group consisting of lithium halosulfides, b = d = 0 and a + c =1.

When the compound of formula (II) is selected from the group consisting of lithium thiophosphates, c = d = 0 and a + b = 1.

When the compound of formula (II) is selected from the group consisting of lithium halothiophosphates, d = 0 and a + b + c =1.

When the compound of formula (II) is selected from the group consisting of lithium sulfides modified with one or more sulfides of elements Q selected from the group consisting of metals different from Li and metalloids, b = c = 0 and a + d = 1.

When the compound of formula (II) is selected from the group consisting of lithium halosulfides modified with one or more sulfides of elements Q selected from the group consisting of metals different from Li and metalloids, b = 0 and a + c + d = 1.

When the compound of formula (II) is selected from the group consisting of lithium thiophosphates modified with one or more sulfides of elements Q selected from the group consisting of metals different from Li and metalloids c = 0 and a + b + d = 1.

When the compound of formula (II) is selected from the group consisting of lithium halothiophosphates modified with one or more sulfides of elements Q selected from the group consisting of metals different from Li and metalloids, a + b + c + d =1.

Preferred compounds of formula (II) are those selected from the group consisting of thiophosphates and halothiophosphates.

One or more materials selected from the group consisting of lithium carbonate Li₂CO₃, lithium oxide Li₂O, lithium hydroxide LiOH, lithium peroxide Li₂O₂, and lithium ternary oxides may be admixed to the one or more compounds of formula (II) provided in step P2), in order to increase the amount of lithium cations and oxygen anions in the coating C2), thus preventing damage to the cathode active material and facilitating a sufficient lithium-ion conductivity of the coating C2).

Said one or more compounds of formula (II) prepared or provided in step P2) may be in the form of a powder, a slurry or a solution.

In step P3) contacting the materials prepared or provided in steps P1) and P2) may comprise mixing said materials.

Preferably, the core particles C1) and the compound of formula (II) are mixed in a mass ratio in the range of from 10:1 to 12000:1, preferably from 40:1 to 170:1.

For instance, mixing comprises ball milling or high shear mixing of the core particles C1) with a dry powder of one or more compounds of formula (II) so that said coated particulate precursor material comprising
CP1) a plurality of core particles C1) as defined above
   and
CP2) disposed on the surfaces of the core particles, a coating comprising one or more compounds of formula (II) as defined above
results. In such cases, it is preferred that in step P1) a plurality of core particles C1) having a particle size in the range of from 100 nm to 10 µm, as determined by SEM, is provided, and in step P2) a dry powder having a particle size in the range of from 10 nm to 1 µm, as determined by SEM, is provided, wherein the size ratio between the core particles C1) and the dry powder provided in step P2) is in the range of from 0.1 to 100.

For instance, mixing comprises spraying a slurry or solution of one or more compounds of formula (II) onto the core particles C1), or mixing core particles C1) with a slurry or solution of one or more compounds of formula (II). Subsequently, the solvent of the solution resp. the carrier liquid of the slurry is evaporated so that said coated particulate precursor material comprising
CP1) a plurality of core particles C1) as defined above
   and
CP2) disposed on the surfaces of the core particles, a coating comprising one or more compounds of formula (II) as defined above
results.

In step P4), the oxygen-involving degradation reactions of compounds of formula (II) are realized by a heat treatment in an oxygen-rich atmosphere. In this way, the compound of formula (II) is degraded on the surface of the cathode active material by oxygen provided from an external source, i.e., without damaging the cathode active material by releasing oxygen from its lattice.

In step P4), heat-treating the coated particulate precursor material resulting from step P3) under an oxidizing atmosphere at a temperature in the range of from 100 °C to 700 °C, preferably in the range of from 100 °C to 350 °C, is carried out in the presence of an oxygen flow or an air flow. The coated particulate precursor material resulting from step P3) may be pressed into pellets which are heat-treated in step P4).

In a third aspect, the present invention also pertains to a coated particulate material obtainable by the process for preparing a coated particulate material according to the above-defined second aspect.

According to a fourth aspect, there is provided an electrode for use in an electrochemical cell, especially in an all-solid-state lithium-ion electrochemical cell. Said electrode comprises
E1) a coated particulate material according to the first aspect as defined above, preferably in a total amount of from 50 mass-% to 99 mass-%, more preferably of from 70 mass-% to 97 mass-%, relative to the total mass of the electrode,
E2) a lithium-ion conducting electrolyte material, preferably in a total amount of from 1 mass-% to 50 mass-%, more preferably of from 3 mass-% to 30 mass-%, relative to the total mass of the electrode,
E3) optionally electron-conductive carbon, preferably selected from the group consisting of carbon nanofibers, carbon nanotubes, graphene, carbon black, acetylene black, and coke,
E4) optionally one or more binding agents.

In the electrode according to the fourth aspect, a coated particulate material E1) according to the first aspect as disclosed above or provided by a process according to the second aspect as disclosed above and an electrolyte material E2) and optionally further constituents E3) and E4) as defined above may be admixed with each other.

The disclosure regarding coated particulate materials provided above in the context of the first and second aspect applies mutatis mutandis to the electrode according to the fourth aspect. Regarding preferred and specific coated particulate materials, reference is made to the disclosure provided above in the context of the coated particulate material according to the first aspect.

Typically, an electrode according to the fourth aspect as described herein is a cathode, i.e. the electrode of an electrochemical cell at which a net positive charge occurs when the cell is discharged.

In the electrode according to the fourth aspect described herein, the coating C2) serves the purpose of facilitating the transfer of lithium-ions between (i) the cathode active material (which is present in the cores C1) of the coated particulate material) and (ii) the solid electrolyte E2). Moreover, the coating C2) serves as a protection layer protecting the solid electrolyte E2) from being oxidized by the cathode active material.

Suitable solid electrolyte materials which are capable of conducting lithium-ions are known in the art. For instance, the solid electrolyte E2) may be selected from the group consisting of lithium-containing sulfides, lithium-containing oxysulfides, lithium-containing oxyphosphates, lithium-containing thiophosphates, lithium argyrodites, lithium containing halosulfides, and lithium-containing halothiophosphates. Herein, the term "lithium-containing" means that lithium cations are present in the chemical compound forming the electrolyte, but cations of other metals than lithium may also be present in the chemical compound forming the solid electrolyte.

Such solid electrolytes have superior lithium-ion conductivity but may be prone for being oxidized by the cathode active material, especially in case of cathode active materials of the 4 V class. In an electrode according to the fourth aspect, the coating C2) serves as a protection layer protecting the solid electrolyte E2) from being oxidized by the cathode active material present in the cores C1) of the coated particulate material E1).

In an electrode according to the fourth aspect as defined herein, a coated particulate material E1) according to the first aspect as disclosed above or provided by a process according to the second aspect as disclosed above and a solid electrolyte material E2) may be admixed with each other and with one or more electron-conducting materials E3) and/or with one or more binding agents E4). Typical electron-conducting materials E3) are those comprising or consisting of elemental carbon, e.g. carbon nanofibers, carbon nanotubes, graphene, carbon black, acetylene black, coke, and graphene oxide. Typical binding agents are poly(vinylidenefluroride) (PVDF), styrene-butadiene rubber (SBR), polyisobutene, poly(ethylene vinyl acetate) and poly(acrylonitrile butadiene).

An electrode according to the fourth aspect as defined herein may comprise a coated particulate material according to the first aspect as disclosed above or provided by a process according to the second aspect as disclosed above in a total amount of from 50 % to 99 %, more preferably of from 70 % to 97 %, relative to the total mass of the electrode without the current collector.

An electrode according to the fourth aspect as defined herein may comprise a solid electrolyte in a total amount of from 1 % to 50 %, more preferably of from 3 % to 30 %, relative to the total mass of the electrode without the current collector.

Optionally, an electrode according to the fourth aspect as defined herein may comprise electron-conducting material comprising or consisting of elemental carbon in a total amount from 0 % to 5 %, more preferably from 0 % to 1 %, relative to the total mass of the electrode without the current collector.

Optionally, an electrode according to the fourth aspect as defined herein may comprise binding agents in a total amount of from 0.1 % to 3 %, relative to the total mass of the electrode without the current collector.

Preferred electrodes according to the fourth aspect as defined herein are those having one or more of the specific and preferred features disclosed herein.

The present invention also pertains to a method of making an electrode according to the fourth aspect as described above. Said method comprises the steps
M1) providing at least one coated particulate material E1) according to the first aspect or obtained by process according to the second aspect
M2) providing at least one solid electrolyte material E2)
M3) optionally providing one or both of further constituents E3) and E4) as defined above
M4) mechanically mixing the components provided in steps M1) to M3) with each other, optionally adding a solvent or a carrier liquid,
M5) compressing the mixed components obtained in step M4) at a pressure above atmospheric pressure, or coating the mixture obtained in step M4) onto a current collector with subsequent removal of said solvent or carrier liquid if necessary
so that an electrode results.

The disclosure regarding coated particulate materials provided above in the context of the first and second aspect and the disclosure regarding the electrode according to the fourth aspect apply mutatis mutandis. Regarding preferred and specific coated particulate materials, reference is made to the disclosure provided above in the context of the coated particulate material according to the first aspect. Regarding preferred and specific electrode constituents E2), E3) and E4), reference is made to the disclosure provided above in the context of the electrode according to the fourth aspect.

In step M4), a composite comprising electrode constituents E1) and E2, and optionally one or both of E3) and E4) and optionally a solvent may be prepared by mechanical mixing, e.g. by means of a planetary mill or ball mill.

In step M5) of the method of making an electrode, the pressure above atmospheric pressure is preferably a pressure in the range of from 1 to 450 MPa, more preferably of from 50 to 450 MPa and yet more preferably of from 75 to 400 MPa.

The present invention also pertains to an electrode, obtainable by the method according to the fourth aspect as described above.

The present invention also pertains to the use of a coated particulate material according to the first aspect or prepared by the process according to the second aspect for preparing an electrode according to the fourth aspect as defined above. The disclosure regarding coated particulate materials provided above in the context of the first and second aspect and the disclosure regarding the electrode according to the fourth aspect apply mutatis mutandis. Regarding preferred and specific coated particulate materials, reference is made to the disclosure provided above in the context of the coated particulate material according to the first aspect.

According to a further aspect, there is provided an electrochemical cell comprising a coated particulate material according to the first aspect as disclosed above or provided by a process according to the second aspect as disclosed above.

In said cell, preferably the coated particulate material may be present in an electrode according to the fourth aspect as disclosed above, especially in a cathode.

The above-defined electrochemical cell may be a rechargeable electrochemical cell comprising the following constituents
α) at least one anode,
β) at least one cathode,
γ) at least one separator.

Electrochemical cells as described herein may be alkali metal containing cells, especially lithium-ion containing cells. In lithium-ion containing cells, the charge transport is affected by Li⁺ ions. In the separator, such electrochemical cell may comprise a solid electrolyte selected from the group consisting of lithium-containing sulfides, lithium-containing oxysulfides, lithium-containing oxyphosphates, lithium-containing thiophosphates, lithium argyrodites, lithium containing halosulfides, lithium-containing halothiophosphates, lithium transition metal halides, and lithium-containing oxyphosphonitrides. Preferably, the solid electrolyte of the separator has the same composition as the solid electrolyte in the electrode E2), so that the diversity of materials present in the cell is reduced, resulting in reduced complexity of the cell and omission of undesirable interactions between the different materials present in the cell. Moreover, presence of the same material in the solid electrolyte E2) and the separator creates favorable conditions for the transfer of lithium-ions between the electrode and the solid electrolyte in the separator.

Suitable separator materials, electrochemically active cathode materials (cathode active materials) and suitable electrochemically active anode materials (anode active materials) are known in the art. Exemplary cathode active materials are disclosed above in the context of the first aspect. Anode active materials are capable of reversibly plating and stripping lithium metal resp. de-intercalating and intercalating lithium-ions. In an electrochemical cell as described herein the anode α) may comprise graphitic carbon, lithium metal or a metal alloy comprising lithium as the anode active material.

The electrochemical cell may be an all-solid-state electrochemical cell.

In certain cases, an electrochemical cell according to the present invention comprises
- a cathode which is an electrode according to the fourth aspect as described above
- a separator layer comprising a solid electrolyte selected from the group consisting of lithium-containing sulfides, lithium-containing oxysulfides, lithium-containing oxyphosphates, lithium-containing thiophosphates, lithium containing argyrodites, lithium containing halosulfides, lithium-containing halothiophosphates, lithium transition metal halides, and lithium-containing oxyphosphonitrides,
- an anode comprising an anode active material capable of reversibly plating and stripping lithium metal resp. de-intercalating and intercalating lithium-ions.

In said electrochemical cell, the coating C2) present in the coated particulate material according to the above-defined first aspect resp. obtained by the process according to the above-defined second aspect separates the cathode active material from the lithium ion-conducting separator layer. Since the cathode active material in the cores C1) is coated with a coating C2) as described in the above-defined first aspect resp. obtained by the process according to the above-defined second aspect, direct contact between the cathode active material and the lithium-ion conducting separator layer is prevented. This effect may be verified by analysis of the cathode before and after 100 charge/discharge cycles e.g. by means of time-of-flight mass spectrometry (ToF-SIMS, for details see examples section). In the cathode comprising a coated particulate material according to the invention, the increase of the amount of oxygenated species of sulfur and phosphorus after 100 charge/discharge cycles is significantly lower, compared to a cathode having the same composition except that no coating C2) is present.

Thus, coating the cathode active material in the cores C1) with a coating C2) as described in the above-defined first aspect resp. obtained by the process according to the above-defined second aspect, allows for implementing electrochemical cells, especially all-solid-state lithium-ion batteries, wherein a cathode active material having a redox potential of 4 V or higher vs. Li⁺/Li is combined with a solid electrolyte E2) and/or with a separator layer comprising or consisting of a lithium-ion conducting material which as such does not exhibit oxidation stability at a redox potential of 4 V or higher vs. Li⁺/Li, e.g. a sulfide-based, thiophosphate-based or oxysulfide-based solid electrolyte. Such lithium-ion conducting materials which do not have high oxidation stability often exhibit one or more favorable properties like stability in the presence of lithium metal or of a metal alloy comprising lithium, easy processability, superior ionic conductivity and low cost which render them suitable for forming a solid electrolyte E2) resp. a separator layer. Thus, the solid electrolyte E2) resp. the separator layer may be suitably selected according to the criteria of stability in the presence of lithium metal or a metal alloy comprising lithium, ionic conductivity, processability and costs, while oxidation stability is not an issue.

The electrochemical cell may have a disc-like or a prismatic shape. The electrochemical cell can include a housing that can be made of steel or aluminum.

A plurality of electrochemical cells as described above may be combined to an all-solid-state battery, which has both solid electrodes and solid electrolyte. A further aspect of the present disclosure refers to batteries, more specifically to an alkali metal ion battery, in particular to a lithium-ion battery comprising at least one electrochemical cell as described above, for example two or more electrochemical cells as described above. Electrochemical cells as described above can be combined with one another in alkali metal ion batteries, for example in series connection or in parallel connection. Series connection is preferred.

The electrochemical cells resp. batteries described herein can be used for making or operating cars, computers, personal digital assistants, mobile telephones, watches, camcorders, digital cameras, thermometers, calculators, laptop BIOS, communication equipment or remote car locks, and stationary applications such as energy storage devices for power plants. A further aspect of the present invention is a method of making or operating cars, computers, personal digital assistants, mobile telephones, watches, camcorders, digital cameras, thermometers, calculators, laptop BIOS, communication equipment, remote car locks, and stationary applications such as energy storage devices for power plants by employing at least one inventive battery or at least one inventive electrochemical cell.

A further aspect of the present disclosure is the use of the electrochemical cell as described above in motor vehicles, bicycles operated by electric motor, robots, aircraft (for example unmanned aerial vehicles including drones), ships or stationary energy stores.

The present disclosure further provides a device comprising at least one inventive electrochemical cell as described above. Preferred are mobile devices such as vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The invention is illustrated further by the following examples which are not limiting.

### Examples

### Preparation of coated particulate material

A first coated particulate material comprising
C1) a plurality of core particles, each core particle comprising the cathode active material LiNi_{0.85}Co_{0.1}Mn_{0.05}O₂ (NCM851005, commercially available)
C2) a coating comprising oxidation products of Li₃PS₄ (thiophosphate compound of formula (II) wherein a = 0.75, b = 0.25, c = d = 0, commercially available)
and a second coated particulate material comprising
C1) a plurality of core particles, each core particle comprising the cathode active material LiNi_{0.85}Co_{0.1}Mn_{0.05}O₂ (NCM851005)
C2) a coating comprising oxidation products of Li₆PS₅Cl (halothiophosphate compound of formula (II) wherein a = 0.625, b = 0.125, c = 0.25, d = 0; commercially available)
were prepared by a process comprising the steps of
P1) providing a plurality of core particles C1) comprising the cathode active material LiNi_{0.85}Co_{0.1}Mn_{0.05}O₂ (NCM851005, commercially available)
P2) providing a powder of either Li₃PS₄ or Li₅PS₅Cl
wherein the mass ratio between the core particles C1) provided in step P1 and the powder provided in step P2) is 99:1
P3) mixing the materials prepared or provided in steps P1) and P2) with each other for 30 minutes, so that a coated particulate precursor material results, said coated particulate precursor material comprising
   CP1) a plurality of core particles C1) each core particle comprising the cathode active material LiNi_{0.85}Co_{0.1}Mn_{0.05}O₂ and
   CP2) disposed on the surfaces of the core particles, a coating comprising either Li₃PS₄ or Li₆PS₅Cl
P4) pressing said coated particulate precursor material obtained in step P3) into pellets and heat-treating the pellets in air at 300 °C for 1 hour, so that the above-defined first coated particulate material resp. the above-defined second coated particulate material results.

### Characterization of the morphology

Each coated particulate material was investigated using scanning electron microscopy (SEM) to determine surface morphology changes due to the coating.

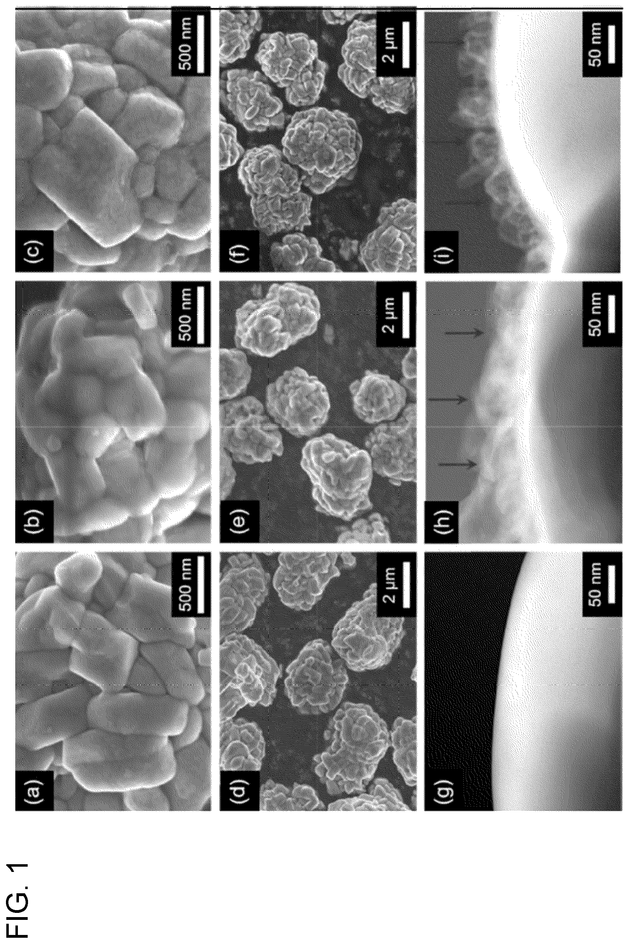

Figure 1 shows SEM micrographs of samples of
- the bare core particles C1) (figs. 1a, 1d)
- the first coated particulate material (figs. 1b, 1e)
- the second coated particulate material (figs. 1c, 1f)
and STEM low-angle annular dark field (LAADF) images of
- the bare core particles C1) (fig. 1g)
- the first coated particulate material (fig. 1h)
- the second coated particulate material (fig. 1i).

In figs. 1a, b, c, the length of the magnification bar is 200 nm. In figs. 1d, e, f, the length of the magnification bar is 1 µm.

The arrows in figure 1h) resp. 1i) indicate the coatings on the core particles C1) of the first resp. the second coted particulate material.

In contrast to the bare core particles C1), the sample of the first coated particulate material shows blurred grain boundaries of the core particles C1) and a flattened overall surface. Apparently, the core particles C1) comprising the cathode active material are encapsulated by the coating C2), resulting in the formation of secondary particles comprising a plurality of core particles C1) surrounded by a coating C2) having a flattened surface. For the second coated particulate material, small flakes can be observed on the particle surface, and the grain boundaries between the core particles C1) seem to be less blurred. In the first coated particulate material, the coating C2) appears thicker and more homogeneously distributed, compared to the second coated particulate material.

As shown in the STEM images, the bare core particles C1) exhibit a smooth surface (fig. 1g), while the first coated particulate material exhibits a coating adhering well on the surface of the core particles C1) (fig. 1h), and the second coated particulate material exhibits a thinner coating (fig. 1i).

Generally, the SEM and STEM investigations confirm that in each case a coated particulate material as defined above was obtained.

### Characterization of the coating composition

To determine the chemical composition of the coatings, X-ray photoelectron spectroscopy (XPS) analysis was performed.

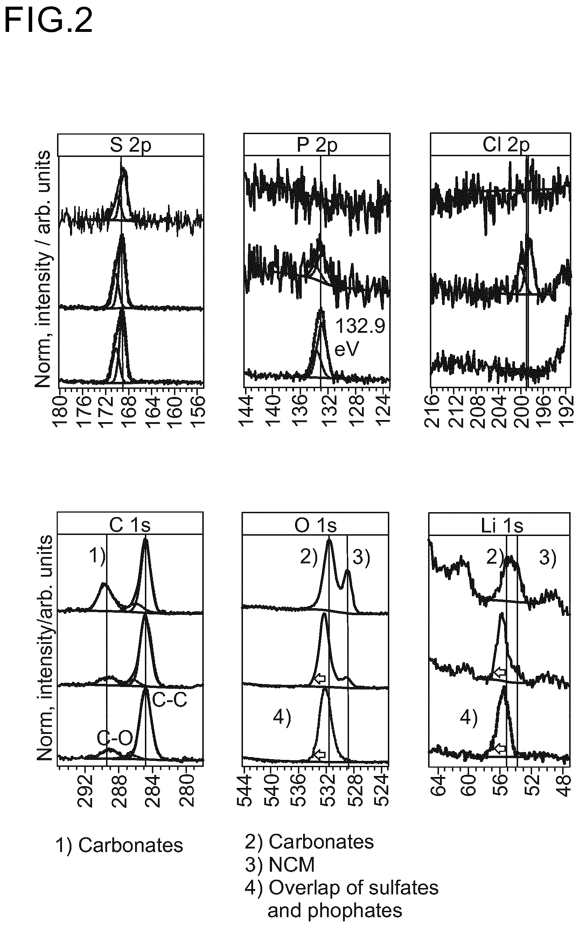

Fig. 2 shows details of XP spectra (binding energy ranges S 2p, P 2p, Cl 2p, C 1s, O 1s and Li 1s) of samples of
- the bare core particles C1) (uppermost spectrum in each case)
- the first coated particulate material (lowermost spectrum in each case)
- the second coated particulate material (middle spectrum in each case).

Overall, the XP detail spectra show that the surface composition of the coated samples is dominated by sulfates (probably Li₂SO₄), phosphates (probably Li₃PO₄) and carbonates (probably Li₂CO₃). For the sample of the bare core particles C1), the fraction of carbonates is higher compared to the samples of the coated particulate materials.

For the sample of the bare core particles C1) (uppermost spectrum in each case), the XP spectrum shows signals which can be assigned to LiNi_{0.85}Co_{0.1}Mn_{0.05}O₂ (denoted as "3) NCM"), and signals which can be assigned to carbonates, probably Li₂CO₃ (denoted as "1) carbonates" resp. "2) carbonates"). In addition, relatively weak signals can be observed in the binding energy range of sulfates, which are most probably due to Li₂SO₄ contaminants originating from the synthesis of LiNi_{0.85}Co_{0.1}Mn_{0.05}O₂. Such contaminants were reported by Ahmed et al. (ACS Nano 2019, 13 (9), 10694-10704, https://doi.org/10.1021/acsnano.9b05047) and were assigned to Li₂SO₄-containing intra-granular nanopores.

For the sample of the first coated particulate material (lowermost spectrum in each case), the XP spectrum shows signals which can be attributed to sulfates and phosphates (probably Li₂SO₄ and Li₃PO₄, respectively). The ratio between the P 2p and the S 2p signals is about 1:4, which is agreement with the stoichiometry of the precursor Li₃PS₄. This indicates that Li₃PS₄ is almost completely converted to sulfates and phosphates (probably Li₂SO₄ and Li₃PO₄) during step P4). In addition, weak signal contributions originating from carbonates (probably Li₂CO₃) can be seen. However, the fraction of carbonates is much smaller compared to the sample of the bare core particles C1), indicating that either the coating is formed on top of the Li₂CO₃-rich surface of the core particles C1) (note that XPS is a surface sensitive technique) or that Li₂CO₃ was involved and consumed in reactions taking place during the heat treatment in step P4). Since signals assigned to LiNi_{0.85}Co_{0.1}Mn_{0.05}O₂ have almost vanished in the first coated particulate material, the coating seems highly covering and/or relatively thick. Assuming that during step P4) Li₃PS₄ reacts with oxygen to Li₂SO₄ and Li₃PO₄, an additional Li-source must be involved, because in the obtained products as a whole (Li₂SO₄ + Li₃PO₄ in molar ratio 4:1) the Li:(S+P) ratio is 11:5 which higher than in Li₃PS₄ (3:5). Without wishing to be bound by any theory, it is conceivable that LiNi_{0.85}Co_{0.1}Mn_{0.05}O₂ and/or Li₂CO₃ serves as the Li-source.

For the sample of the second coated particulate material (middle spectrum in each case), the XP spectrum shows S 2p and P 2p signals at the same binding energy position as in the XP spectrum of the sample of the first coated particulate material, indicating that sulfates and phosphates (probably Li₂SO₄ and Li₃PO₄) are also present in the second coated particulate material. Remarkably, the ratio between the P 2p and the S 2p signals is about 1:25, which is far from the stoichiometry of the precursor Li₆PS₅Cl. Also, the intensity of the Cl 2p signal at 198.4 eV is relatively weak, resulting in a Cl 2p : S 2p ratio of about 1:16. The binding energy of the Cl 2p signal may be assigned to LiCl. Overall, the S 2p, P 2p and Cl 2p spectra indicate that the coating formation is accompanied by a loss of P and Cl species, eventually due to the formation of volatile P- and Cl-containing products. Carbonate (probably Li₂CO₃) still seems to be present in the uppermost surface region. Signals assigned to LiNi_{0.85}Co_{0.1}Mn_{0.05}O₂ are more intense compared to the sample of the first coated particulate material, thus the coating seems to be less covering and/or thinner for the second coated particulate material. This finding is in agreement with the SEM results (see fig. 1).

### Influence of the coating on the electronic conductivity

For determining the electronic conductivity, a sample of the cathode active material to be studied (bare core particles C1), first coated particulate material, second coated particulate material, resp.) was placed between two steel stamp current collectors. A chronoamperometry technique was used with a polarization voltage of 100 mV over 300 s. During this time the current was substantially constant. The electronic conductivity of the sample of the bare core particles C1) is 22.7 mS cm⁻¹. In contrast, the samples of the first and of the second coated particulate material exhibit a lower electronic conductivity of 10.7 mS cm⁻¹ and 3.8 mS cm⁻¹, respectively. These results indicate that the coating hinders the electronic transport through the cathode active material. However, while a low electronic conductivity may limit the cell performance (i.e., the power density) on the one hand, a coating with low electronic conductivity is beneficial on the other hand to mitigate interfacial degradation and self-discharge.

### Influence of the coating on the cell performance

Galvanostatic charge/discharge measurements were carried out using a VMP300 electrochemical workstation (Biologic Science Instrument SAS) and a MACCOR potentiostat/galvanostat. A Biologic VMP 300 potentiostat was used to perform the impedance measurements along with cycling. The cells were cycled in the voltage range of 2 to 3.7 V vs. In/InLi at a C-rate of 0.2C (~0.39 mA cm⁻², 1C = 180 mA(g cathode active material)⁻¹). The impedance measurements were conducted after charging up to 3.7 V vs. In/InLi. The impedance spectra were measured by applying 10 mV amplitude in a frequency range of 1 MHz-0.1 Hz with 10 points per decade. A MACCOR galvanostat was used to cycle the cells in a voltage range of 2 to 3.9 V vs. In/InLi at a C-rate of 0.2C. The dQ/dV plots were derivedfrom the charge/discharge curves. All electrochemical measurements were conducted in a 25 °C climate chamber.

Galvanostatic charge/discharge tests were carried out to characterize the effect of the coating C2) on the electrochemical performance.

### The cells had the following configuration

In/InLi | Li_{5.5}PS_{4.5}Cl_{1.5} | bare LiNi_{0.85}Co_{0.10}Mn_{0.05}O₂ resp. first or second coated particulate material as defined above/Li_{5.5}PS_{4.5}Cl_{1.5}.

In the cathode of the cells, the cathode active material (bare LiNi_{0.85}Co_{0.10}Mn_{0.05}O₂ resp. first or second coated particulate material as defined above) is mixed with Li_{5.5}PS_{4.5}Cl_{1.5} in a ratio of 7:3. No carbon additives or binders were used. To achieve uniform composite cathodes, the mixture was hand ground with an agate mortar for 30 min.

All cells were assembled in an argon-filled glovebox (*p*(O₂₎/*p* < 0.1 ppm and *p*_{(H2O)}/*p* < 0.1 ppm; MBRAUN Labmaster SP). For assembling, a home-made pellet-type cell case with 10 mm diameter PEEK sleeve and two stainless steel stamps was used. First, 60 mg Li_{5.5}PS_{4.5}Cl_{1.5} was pressed by hand to obtain a separator. About 12 mg cathode composite was added on one side of the obtained separator and distributed evenly so that a stacked pellet was formed. Afterwards, the stacked pellet was pressed at 3 tons (~380 MPa) for 3 min. An indium foil (Alfa Aesar, 99.99%, 8 mm diameter, 100 µm thickness) and a lithium foil (Albemarle, Rockwood Lithium GmbH, 99.9%, 4 mm diameter, 100 µm thickness) were added on the other side of the separator to form the In/InLi anode. The cell was fixed by an aluminum frame to maintain a constant pressure (~ 70 MPa).

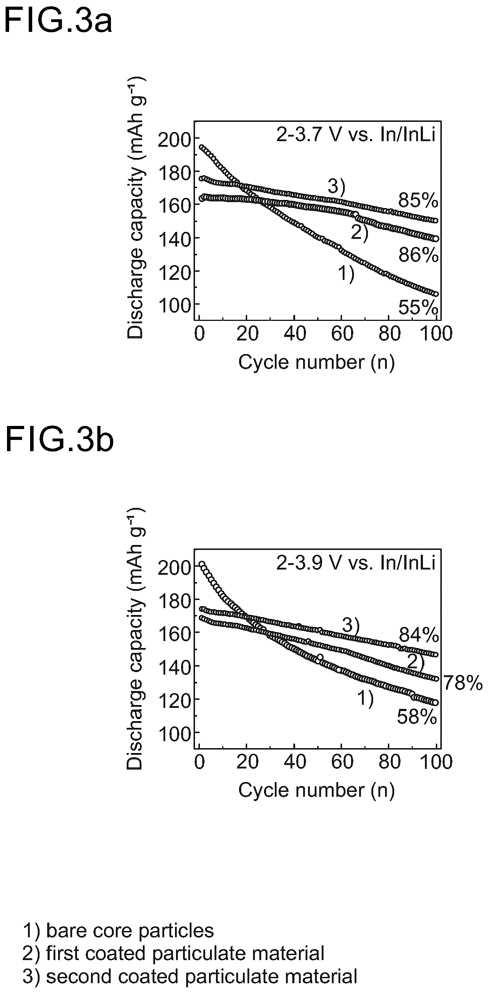

The cells were cycled at 0.2C (ca. 0.39 mAcm⁻²) in the voltage range of 2 to 3.7 V vs. In/InLi (fig. 3a) resp. 2 to 3.9 V vs. In/InLi (fig. 3b) at 25 °C. Figs. 3a and 3b show the development of the discharge capacity with the cycle number.

The initial discharge capacity of cells having a cathode comprising one of the coated particulate materials is lower compared to the reference cell having a cathode comprising bare LiNi_{0.85}Co_{0.10}Mn_{0.05}O₂. Without wishing to be bound by any theory, it is presently assumed that this is due to reduced electronic conductivity within the cathode caused by the electronically insulating coating C2). This assumption could also explain why the cell having a cathode comprising the first coated particulate material shows a lower initial discharge capacity compared to the cell having a cathode comprising the second coated particulate material. As derived from the SEM and XPS investigations (see above), the coating C2) of the second coated particulate material may be thinner than the coating C2) of the first coated particulate material.

During cycling, however, the capacity loss of the cells having a cathode comprising one of the coated particulate materials is significantly reduced, compared to the reference cell. Accordingly, the cell having a cathode comprising the first coated particulate material and the cell having a cathode comprising the second coated particulate material show much higher capacity retention after 100 cycles, i.e., 85% and 86%, respectively (fig. 3a). The reference cell (cathode comprising bare core particles C1)) exhibits a high initial capacity of 194.3 mAh(g cathode active material)⁻¹, but after100 cycles the capacity decreases to 106.1 mAh(g cathode active material)⁻¹, corresponding to a capacity retention of 55%. In contrast, the cell having a cathode comprising the first coated particulate material exhibits an initial discharge capacity of 163.2 mAh(g cathode active material)⁻¹ and a capacity of 139.3 mAh(g cathode active material)⁻¹ after 100 cycles, corresponding to a capacity retention of 86 %. The cell having a cathode comprising the second coated particulate material shows an initial discharge capacity of 175.3 mAh(g cathode active material)⁻¹, and a capacity of 149.8 mAh(g cathode active material)⁻¹ after 100 cycles, corresponding to a capacity retention of 85%.

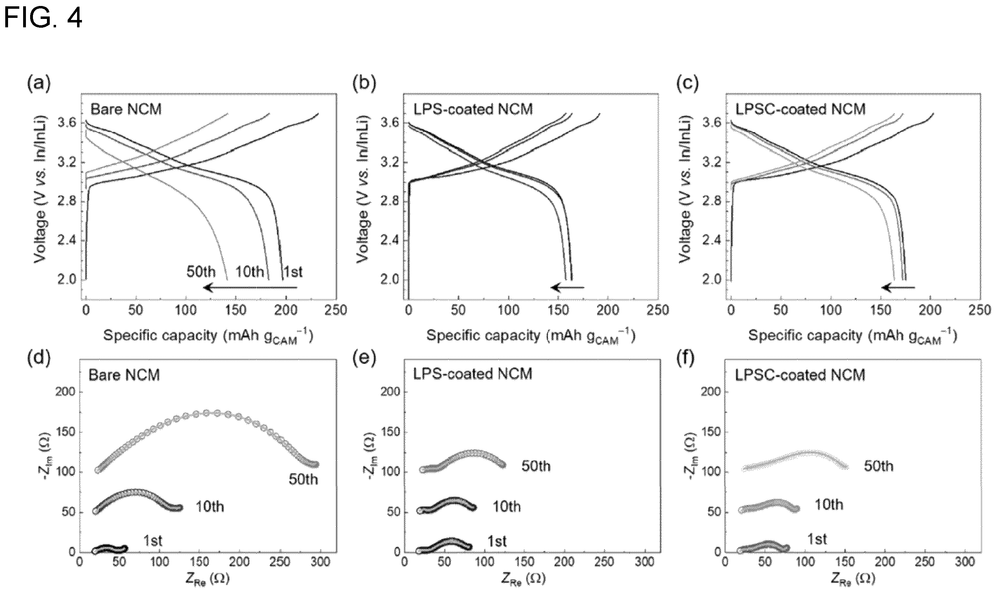

Figs. 4a-c present exemplary galvanostatic charge/discharge curves (1st, 10th and 50th cycle in each case) of the three cells in the voltage range of 2 to 3.7 V vs In/InLi. In figs. 4a-c "Bare NCM" denotes the reference cell, "LPS-coated NCM" denotes the cell having a cathode comprising the first coated particulate material, and "LPSC-coated NCM" denotes the cell having a cathode comprising the second coated particulate material.

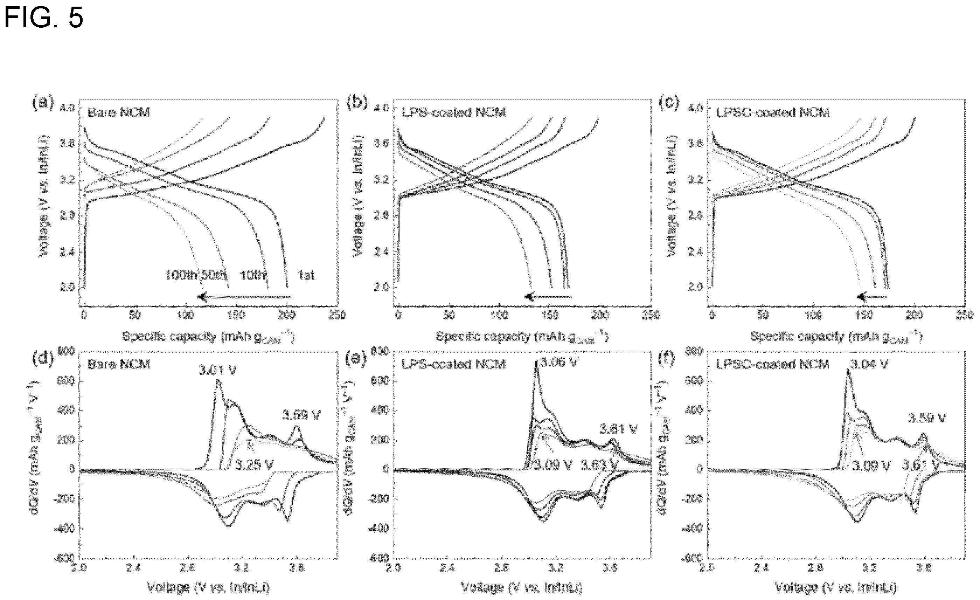

With increasing the upper cycling voltage to 3.9 V vs. In/InLi (Fig. 3b), the initial capacity of the reference cell as well as of the cell having a cathode comprising the first coated particulate material slightly increase due to the higher state of charge (SOC). However, the harsher cycling condition leads to a more severe degradation. Exemplary galvanostatic charge/discharge curves (1st, 10th, 50th and 100th cycle in each case) of the three cells in the voltage range of 2 to 3.9 V vs In/InLi are shown in figs. 5a-c. In figs. 5a-c "Bare NCM" denotes the reference cell, "LPS-coated NCM" denotes the cell having a cathode comprising the first coated particulate material, and "LPSC-coated NCM" denotes the cell having a cathode comprising the second coated particulate material. After 100 cycles, the cells with show capacity retentions of 58% (bare core particles C1), 78% (first coated particulate material), and 84% second coated particulate material), respectively.

Overall, the cell cycling tests demonstrate that both coatings C2) mitigate the capacity loss during cycling and thus improve the battery performance. The second coated particulate material performs slightly better in terms of discharge capacity and capacity retention, which may be attributed to a higher ionic conductivity of the coating and/or a thinner coating.

To monitor the impedance evolution upon cell cycling, electrochemical impedance spectra (EIS) were collected at the charged (delithiated) state at 3.7 V *vs.* In/InLi. Figures 4d-f show the Nyquist plots. In figs. 4d-f "Bare NCM" denotes the reference cell, "LPS-coated NCM" denotes the cell having a cathode comprising the first coated particulate material, and "LPSC-coated NCM" denotes the cell having a cathode comprising the second coated particulate material. After the first charge, the reference cell (cathode comprising bare core particles C1)) exhibits the lowest cell impedance, which coincides with the highest initial discharge capacity. The initial impedance of the cell having a cathode comprising the first coated particulate material is significantly higher, while the difference over the cell having a cathode comprising the second coated particulate material is less significant. After 50 cycles, the impedance of the reference cell has significantly increased compared to the cells having a cathode comprising the first resp. the second coated particulate material, where the impedance has increased much less significantly.

The dQ/dV plots (figs. 5d-f, wherein "Bare NCM" denotes the reference cell, "LPS-coated NCM" denotes the cell having a cathode comprising the first coated particulate material, and "LPSC-coated NCM" denotes the cell having a cathode comprising the second coated particulate material) of the three cells for the 1st, 10th, 50th and 100 cycle (voltage range 2 to 3.9 V vs. In/InLi in each case) show the typical redox peaks indicating multiple phase transition processes of cathode active materials containing nickel, cobalt and manganese, including the transitions from the first hexagonal (H1) phase to the monoclinic (M) phase, the M phase to the second hexagonal (H2) phase, and the H2 phase to the third hexagonal (H3) phase. The H2-H3 phase transition induces a significant volumetric strain in Ni-rich cathode active materials, which leads to contact loss at the interface between cathode active material and solid electrolyte. For the first cycle, the cells having a cathode comprising the first resp. second coated particulate material exhibit an upward shift in the redox peak potential compared to the reference cell, suggesting that the initial deintercalation process is kinetically hindered by the coating. It is to be noted that the cell having a cathode comprising the second coated particulate material shows lower overpotential than the cell having a cathode comprising the first coated particulate material, which corresponds well with the results obtained by electrochemical impedance spectroscopy (fig 4d-f). Upon cycling, the shift in redox potentials for the reference cell corresponds to an increasing overvoltage caused by increasing interfacial degradation. In contrast to the reference cell, the cells having a cathode comprising the first resp. the second coated particulate material show only minor redox peak shifts. This indicates that the coatings mitigate interfacial degradation, which is in agreement with the results obtained by electrochemical impedance spectroscopy (fig 4d f).

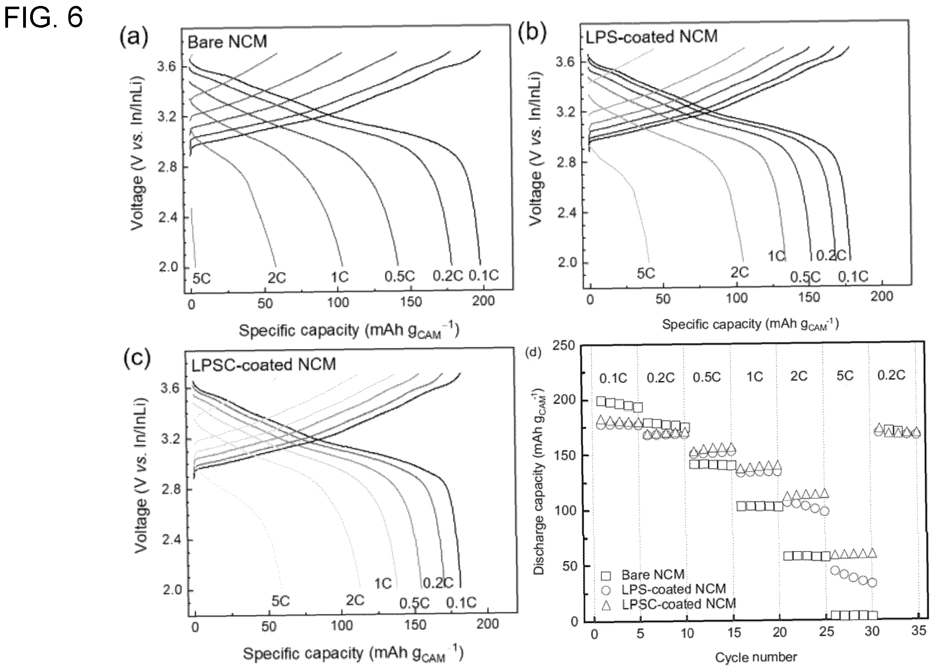

Rate tests at various C-rates from 0.1C to 5C (1C = 1.93 mA cm⁻²) were performed to test the fast-charging capability of the cathode active materials (bare core particles C1), first coated particulate material, second coated particulate material, resp.). The results are shown in figs. 6a-d, wherein "Bare NCM" denotes the reference cell, "LPS-coated NCM" denotes the cell having a cathode comprising the first coated particulate material, and "LPSC-coated NCM" denotes the cell having a cathode comprising the second coated particulate material. At low C-rates (0.1C and 0.2C) the reference cell (cathode comprising bare core particles C1)) exhibits a higher discharge capacity than the cells having a cathode comprising the first resp. the second coated particulate material. With increasing current density, the cells having a cathode comprising the first resp. the second coated particulate material maintain higher discharge capacity. Even at a high C-rate of 2C, the cells having a cathode comprising the first resp. the second coated particulate material deliver 112 and 107 mAh(g cathode active material)⁻¹ , respectively. This result implies that in the first and in the second coated particulate material the coatings mitigate the charge transfer barrier at high current density. Furthermore, the capacity of the cell having a cathode comprising the second coated particulate material remains much more stable than that of the cell having a cathode comprising the first coated particulate material at high C-rates, which may be attributed to slower interfacial degradation due to the lower electronic conductivity of the second coated particulate material.

### Influence of the coating on the interfacial reaction between the cathode active material and thiophosphate-based solid electrolyte

To investigate the influence of the coatings C2) on the interfacial reaction between the cathode active material LiNi_{0.85}Co_{0.10}Mn_{0.05}O₂ and the solid electrolyte Li_{5.5}PS_{4.5}Cl_{1.5}, time-of-flight mass spectrometry (ToF-SIMS) analysis of the cathodes was performed before and after cell cycling. The analysis was performed on the surface of the cathodes which was oriented towards the current collector. At least ten mass spectra were measured per sample in different areas on the surface to ensure the reproducibility of the results.

Without wishing to be bound by any theory, it is understood that PO₃⁻ and SO₃⁻ fragments can be considered as indicators for the oxygen-involving interfacial reaction of a cathode active material with thiophosphate or halothiophosphate of the solid electrolyte to oxygenated species of phosphorus and sulfur.

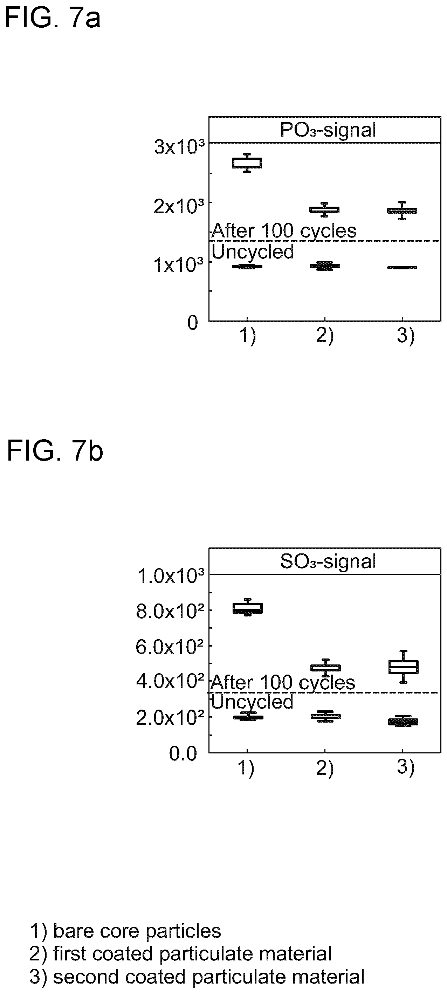

Figs. 7a and 7b show the PO₃⁻ and SO₃⁻ signal intensities normalized to the respective total ion intensity. Before cycling, the normalized intensities of the three samples (cathode comprising bare LiNi_{0.85}Co_{0.10}Mn_{0.05}O₂, cathode comprising the first coated particulate material, cathode comprising the second coated particulate material) are almost at the same level, although the coatings C2) of the first and the second coated particulate material comprise phosphate and sulfate.

It is known from literature (Walther, F. et al., Chem. Mater. 2019, 31 (10), 3745-3755. https://doi.org/10.1021/acs.chemmater.9b00770; Walther, F. et al, Chem. Mater. 2020, 32 (14), 6123-6136. https://doi.org/10.1021/acs.chemmater.0c01825; Nolan, A.M. et al,. Joule 2018, 2(10), 2016-2046. https://doi.org/10.1016/j.joule.2018.08.017; Xiao, Y et al., Joule 2019, 3(5), 1252-1275) that thiophosphates and cathode active materials like LiNi_{0.85}Co_{0.10}Mn_{0.05}O₂ can react with each other already on mere contact, forming products such as Li₃PO₄ and Li₂SO₄, among others. While in the cathode containing the first resp. the second coated particulate material these reactions are suppressed by the coatings C2), they are not hindered in the cathode containing the bare cathode active material, resulting in the formation of an amount of PO*ₓ*⁻ and SO*ₓ*⁻ fragments in the ToF-SIMS data similar to that of the cathode containing the first resp. the second coated particulate material.

After cell cycling (100 cycles), the intensity in PO₃⁻ and SO₃⁻ fragments is significantly increased for all samples. However, the signal increase is much lower for the cathode containing the first resp. the second coated particulate material. This indicates that the interfacial reaction at the interface between the cathode active material LiNi_{0.85}Co_{0.10}Mn_{0.05}O₂ and the solid electrolyte Li_{5.5}PS_{4.5}Cl_{1.5} is suppressed by the coating C2). In turn, this conclusion explains the improvement in capacity retention and cell performance. Since the signal intensities are comparable for both coatings C2), the interfacial reaction seems to be suppressed to a similar extent by both coatings.

## Claims

1. A coated particulate material comprising
C1) a plurality of core particles, each core particle comprising one or more compounds of formula (I):
Li₁₊ₜ[NiₓCo_{y}Mn_{z}Mᵤ]₁₋ₜO₂ (I)
wherein $0 \leq x \leq 1$ $0 \leq y \leq 1$ $0 \leq z \leq 1$ $0 \leq u \leq 0.15$ $x + y + z > 0$ $x + y + z + u = 1$ $0 \leq t \leq 0.2$ M if present is one or more elements selected from the group consisting of Al, Mg, Ba, B, Mo, Ti, Nb, W, Zr,
and
C2) disposed on the surfaces of the core particles, a coating comprising
- lithium cations, and
- oxygenated sulfur species,
wherein said oxygenated sulfur species are oxidation products of one or more compounds of the formula (II)
(Li₂S)ₐ₍P₂S₅)_{b}(LiX)_{c}(Q_{2/e}S)_{d} (II)
wherein
X corresponds to one or more selected from the group consisting of F, Cl, Br and I, and pseudohalides selected from the group consisting of N₃⁻, SCN⁻, CN⁻, OCN⁻, BF⁻ and BH⁻,
Q corresponds to one or more elements selected from the group consisting of B, Al, Si, Ge, Sn, Sb, Zr, Ga, Zn and Mg,
e is the oxidation number of Q, $0 \leq a \leq 1$
$0 \leq b < 1 ,$ preferably 0 ≤ b < 0.98
$0 \leq c < 1 ,$ preferably 0 ≤ c < 0.98
$0 \leq d < 1 ,$ preferably 0 ≤ d < 0.98 $a + b + c + d = 1$ with the proviso that when a = 0,
- c is > 0, preferably ≥ 0.02
- and one of b and d is > 0, preferably ≥ 0.02.

2. Coated particulate material according to claim 1, wherein the compound of formula (II) is selected from the group consisting of
lithium sulfide,
lithium halosulfides,
lithium thiophosphates,
lithium halothiophosphates,
lithium sulfide modified with one or more sulfides of elements Q selected from the group consisting of B, Al, Si, Ge, Sn, Sb, Zr, Ga, Zn and Mg,
lithium halosulfides modified with one or more sulfides of elements Q selected from the group consisting of B, Al, Si, Ge, Sn, Sb, Zr, Ga, Zn and Mg,
lithium thiophosphates modified with one or more sulfides of elements Q selected from the group consisting of B, Al, Si, Ge, Sn, Sb, Zr, Ga, Zn and Mg,
and lithium halothiophosphates modified with one or more sulfides of elements Q selected from the group consisting of B, Al, Si, Ge, Sn, Sb, Zr, Ga, Zn and Mg.

3. Coated particulate material according to claim 1 or 2, wherein said oxygenated sulfur species comprise sulfate anions wherein at least a part of the sulfate anions, preferably the total amount of sulfate anions, in the coating is present as lithium sulfate Li₂SO₄.

4. Coated particulate material according to any preceding claim, wherein said coating further comprises oxygenated phosphorus species, wherein said oxygenated phosphorus species are oxidation products of one or more compounds of the formula (II) wherein b > 0.

5. Coated particulate material according to claim 4, wherein said oxygenated phosphorus species are oxidation products of one or more compounds from the group consisting of
lithium thiophosphates,
lithium halothiophosphates,
lithium thiophosphates and lithium halothiophosphates modified with sulfides of elements Q selected from the group consisting of B, Al, Si, Ge, Sn, Sb, Zr, Ga, Zn and Mg.

6. Coated particulate material according to claim 4 or 5, wherein said oxygenated phosphate species comprise phosphate anions wherein at least a part of the phosphate anions, preferably the total amount of phosphate anions, in the coating is present as lithium phosphate Li₃PO₄.

7. Coated particulate material according to any preceding claim, wherein
- the fraction of sulfur is in the range of from 0.09 % to 10.0 %, preferably 0.4 % to 4.0 %, as detected by inductively coupled plasma optical emission spectrometry
and/or
- the fraction of phosphorus is in the range of from 0.01 % to 10.0 %, preferably 0.05 % to 4.0 % as detected by inductively coupled plasma optical emission spectrometry
in each case relative to the total mass of the plurality of core particles C1) and their coatings C2).

8. Coated particulate material according to any preceding claim, wherein said coating comprises Li₃PO₄ and Li₂SO₄.

9. Coated particulate material according to any preceding claim, wherein said coating further comprises one or more of
- halide anions, wherein at least a part of the halide anions, preferably the total amount of halide anions in the coating is present as lithium halide,
- carbonate anions, wherein at least a part of the carbonate anions, preferably the total amount of carbonate ions in the coating is present as lithium carbonate,
- anions selected from the group consisting of oxide anions, hydroxide anions and peroxide anions, wherein at least a part of the said anions, preferably the total amount of said anions in the coating is present as one or more of lithium oxide Li₂O, lithium hydroxide LiOH and lithium peroxide Li₂O₂,
- oxoanions of elements from the group consisting of B, Al, Si, Ge, Sn, Sb, Zr, Ga, Zn and Mg, wherein at least a part of the oxoanions, preferably the total amount of oxoanions in the coating is present as a mixed oxide of lithium and said one or more element from the group consisting of B, Al, Si, Ge, Sn, Sb, Zr, Ga, Zn and Mg.

10. Electrode for use in a solid-state lithium-ion electrochemical cell and/or in an all-solid-state lithium-ion electrochemical cell, comprising
E1) a coated particulate material as defined in any of claims 1 to 9, preferably in a total amount of from 50 mass-% to 99 mass-%, more preferably of from 70 mass-% to 97 mass-%, relative to the total mass of the electrode,
E2) a lithium-ion conducting solid electrolyte material, preferably in a total amount of from 1 mass-% to 50 mass-%, more preferably of from 3 mass-% to 30 mass-%, relative to the total mass of the electrode,
E3) optionally electron-conductive carbon, preferably selected from the group consisting of carbon nanofibers, carbon nanotubes, graphene, carbon black, acetylene black, and coke,
E4) optionally one or more binding agents.

11. Process for preparing a coated particulate material as defined in any of claims 1 to 9, comprising the steps
P1) preparing or providing a plurality of core particles C1) as defined in claim 1,
P2) preparing or providing one or more compounds of formula (II) as defined in claim 1,
P3) contacting the materials prepared or provided in steps P1) and P2) with each other, so that a coated particulate precursor material results, said coated particulate precursor material comprising
CP1) a plurality of core particles C1) as defined in claim 1 and
CP2) disposed on the surfaces of the core particles, a coating comprising one or more compounds of formula (II) as defined in claim 1
P4) heat-treating the coated particulate precursor material resulting from step P3) under an oxidizing atmosphere at a temperature in the range of from 100 °C to 700 °C, so that a coated particulate material as defined in any of claims 1 to 9 results.

12. Process according to claim 11, wherein
- the one or more compounds of formula (II) as defined in claim 1 prepared or provided in step P2) are selected from the group consisting of
lithium sulfide,
lithium halosulfides,
lithium thiophosphates,
lithium halothiophosphates,
lithium sulfide modified with one or more sulfides of elements selected from the group consisting of B, Al, Si, Ge, Sn, Sb, Zr, Ga, Zn and Mg,
lithium halosulfides modified with one or more sulfides of elements selected from the group consisting of B, Al, Si, Ge, Sn, Sb, Zr, Ga, Zn and Mg,
lithium thiophosphates modified with one or more sulfides of elements selected from the group consisting of B, Al, Si, Ge, Sn, Sb, Zr, Ga, Zn and Mg,
and lithium halothiophosphates modified with one or more sulfides of elements selected from the group consisting of B, Al, Si, Ge, Sn, Sb, Zr, Ga, Zn and Mg,
and/or
- in step P3) contacting the materials prepared or provided in steps P1) and P2) comprises mixing said materials, preferably by means of
- ball milling or high shear mixing of the core particles C1) with a dry powder of one or more compounds of formula (I)
- spraying a slurry or solution of one or more compounds of formula (II) onto the core particles C1, and evaporating the solvent of the solution resp. the carrier liquid of the slurry
- mixing core particles C1) with a slurry or solution of one or more compounds of formula (II), and evaporating the solvent of the solution resp. the carrier liquid of the slurry
and/or
- in step P4) the heat-treating is carried out in the presence of an oxygen flow or an air flow.

13. Process according to claim 11 or 12, wherein
one or more materials selected from the group consisting of lithium carbonate Li₂CO₃, lithium oxide Li₂O, lithium hydroxide LiOH, lithium peroxide Li₂O₂, and lithium ternary oxides
is admixed to the one or more compounds provided in step P2).

14. An electrochemical cell comprising
- a coated particulate material as defined in any of claims 1 to 9 or obtained by a process according to any of claims 11 to 13,
or
- an electrode as defined in claim 10.

15. Use of a coated particulate material according to any of claims 1 to 9 or obtained by a process according to any of claims 11 to 13 for preparing an electrode as defined in any of claims 10 and 11.

## Patentansprüche

1. Ein beschichtetes partikuläres Material, umfassend
C1) eine Vielzahl von Kernpartikeln, wobei jedes Kernpartikel eine oder mehrere Verbindungen der Formel (I) umfasst:
Li₁+ₜ[NiₓCo_{y}Mn_{z}Mu]₁₋ₜO₂ (I)
wobei $0 \leq x \leq 1$ $0 \leq y \leq 1$ $0 \leq z \leq 1$ $0 \leq u \leq 0.15$ $x + y + z > 0$ $x + y + z + u = 1$ $0 \leq t \leq 0.2$ M, falls vorhanden, ein oder mehrere Elemente ausgewählt aus der Gruppe bestehend aus Al, Mg, Ba, B, Mo, Ti, Nb, W, Zr,
und
C2) auf den Oberflächen der Kernpartikel angeordnet, eine Beschichtung
- umfassend Lithiumkationen und
- sauerstoffhaltige Schwefelspezies,
wobei die sauerstoffhaltigen Schwefelspezies Oxidationsprodukte einer oder mehrerer Verbindungen der Formel (II) sind
(Li₂S)a(P₂S₅)_{b}(LiX)_{c}(Q_{2/e}S)_{d} (II)
wobei
X einem oder mehreren ausgewählt aus der Gruppe bestehend aus F, Cl, Br und I sowie Pseudohalogeniden ausgewählt aus der Gruppe bestehend aus N₃⁻, SCN⁻, CN⁻, OCN⁻, BF⁻ und BH⁻ entspricht,
Q einem oder mehreren Elementen ausgewählt aus der Gruppe bestehend aus B, Al, Si, Ge, Sn, Sb, Zr, Ga, Zn und Mg entspricht,
e die Oxidationszahl von Q ist, $0 \leq a \leq 1$0 ≤ a ≤ 1
$0 \leq b < 1 ,$ vorzugsweise 0 ≤ b < 0,98
$0 \leq c < 1 ,$ vorzugsweise 0 ≤ c < 0,98
$0 \leq d < 1 ,$vorzugsweise 0 ≤ d < 0,98 $a + b + c + d = 1$
mit der Maßgabe, dass wenn a = 0,
- c > 0 ist, vorzugsweise ≥ 0,02
- und eines von b und d > 0 ist, vorzugsweise ≥ 0,02.

2. Beschichtetes partikuläres Material nach Anspruch 1, wobei die Verbindung der Formel (II) ausgewählt ist aus der Gruppe bestehend aus Lithiumsulfid,
Lithiumhalogensulfiden,
Lithiumthiophosphaten,
Lithiumhalogenthiophosphaten,
mit einem oder mehreren Sulfiden von Elementen Q ausgewählt aus der Gruppe bestehend aus B, Al, Si, Ge, Sn, Sb, Zr, Ga, Zn und Mg modifiziertem Lithiumsulfid,
mit einem oder mehreren Sulfiden von Elementen Q ausgewählt aus der Gruppe bestehend aus B, Al, Si, Ge, Sn, Sb, Zr, Ga, Zn und Mg modifizierten Lithiumhalogensulfiden,
mit einem oder mehreren Sulfiden von Elementen Q ausgewählt aus der Gruppe bestehend aus B, Al, Si, Ge, Sn, Sb, Zr, Ga, Zn und Mg modifizierten Lithiumthiophosphaten,
und mit einem oder mehreren Sulfiden von Elementen Q ausgewählt aus der Gruppe bestehend aus B, Al, Si, Ge, Sn, Sb, Zr, Ga, Zn und Mg modifizierten Lithiumhalogenthiophosphaten.

3. Beschichtetes partikuläres Material nach Anspruch 1 oder 2, wobei die sauerstoffhaltigen Schwefelspezies Sulfatanionen umfassen, wobei zumindest ein Teil der Sulfatanionen, vorzugsweise die Gesamtmenge der Sulfatanionen, in der Beschichtung als Lithiumsulfat Li₂SO₄ vorliegt.

4. Beschichtetes partikuläres Material nach einem der vorhergehenden Ansprüche, wobei die Beschichtung ferner sauerstoffhaltige Phosphorspezies umfasst, wobei die sauerstoffhaltigen Phosphorspezies Oxidationsprodukte einer oder mehrerer Verbindungen der Formel (II) sind, wobei b > 0.

5. Beschichtetes partikuläres Material nach Anspruch 4, wobei die sauerstoffhaltigen Phosphorspezies Oxidationsprodukte einer oder mehrerer Verbindungen aus der Gruppe bestehend aus
Lithiumthiophosphaten,
Lithiumhalogenthiophosphaten,
mit Sulfiden von Elementen Q ausgewählt aus der Gruppe bestehend aus B, Al, Si, Ge, Sn, Sb, Zr, Ga, Zn und Mg modifizierten Lithiumthiophosphaten und Lithiumhalogenthiophosphaten sind.

6. Beschichtetes partikuläres Material nach Anspruch 4 oder 5, wobei die sauerstoffhaltigen Phosphatspezies Phosphatanionen umfassen, wobei zumindest ein Teil der Phosphat anionen, vorzugsweise die Gesamtmenge der Phosphat anionen, in der Beschichtung als Lithiumphosphat Li₃PO₄ vorliegt.

7. Beschichtetes partikuläres Material nach einem der vorhergehenden Ansprüche, wobei
- der Schwefelanteil im Bereich von 0,09 % bis 10,0 %, vorzugsweise 0,4 % bis 4,0 %, gemessen mittels induktiv gekoppelter Plasma-Atomemissionsspektrometrie liegt
und/oder
- der Phosphoranteil im Bereich von 0,01 % bis 10,0 %, vorzugsweise 0,05 % bis 4,0 %, gemessen mittels induktiv gekoppelter Plasma-Atomemissionsspektrometrie liegt
jeweils bezogen auf die Gesamtmasse der Vielzahl von Kernpartikeln C1) und deren Beschichtungen C2).

8. Beschichtetes partikuläres Material nach einem der vorhergehenden Ansprüche, wobei die Beschichtung Li₃PO₄ und Li₂SO₄ umfasst.

9. Beschichtetes partikuläres Material nach einem der vorhergehenden Ansprüche, wobei die Beschichtung ferner eines oder mehrere der folgenden umfasst:
- Halogenidanionen, wobei zumindest ein Teil der Halogenidanionen, vorzugsweise die Gesamtmenge der Halogenidanionen in der Beschichtung als Lithiumhalogenid vorliegt,
- Carbonatanionen, wobei zumindest ein Teil der Carbonatanionen, vorzugsweise die Gesamtmenge der Carbonationen in der Beschichtung als Lithiumcarbonat vorliegt,
- Anionen ausgewählt aus der Gruppe bestehend aus Oxidanionen, Hydroxidanionen und Peroxidanionen, wobei zumindest ein Teil der genannten Anionen, vorzugsweise die Gesamtmenge der genannten Anionen in der Beschichtung als eines oder mehrere von Lithiumoxid Li₂O, Lithiumhydroxid LiOH und Lithiumperoxid Li₂O₂ vorliegt,
- Oxoanionen von Elementen aus der Gruppe bestehend aus B, Al, Si, Ge, Sn, Sb, Zr, Ga, Zn und Mg, wobei zumindest ein Teil der Oxoanionen, vorzugsweise die Gesamtmenge der Oxoanionen in der Beschichtung als Mischoxid aus Lithium und dem einen oder den mehreren Elementen aus der Gruppe bestehend aus B, Al, Si, Ge, Sn, Sb, Zr, Ga, Zn und Mg vorliegt.

10. Elektrode zur Verwendung in einer Festkörper-Lithiumionen-elektrochemischen Zelle und/oder in einer Vollfeststoff-Lithiumionen-elektrochemischen Zelle, umfassend
E1) ein beschichtetes partikuläres Material wie in einem der Ansprüche 1 bis 9 definiert, vorzugsweise in einer Gesamtmenge von 50 Masse-% bis 99 Masse-%, bevorzugter von 70 Masse-% bis 97 Masse-%, bezogen auf die Gesamtmasse der Elektrode,
E2) ein Lithiumionen-leitendes Festelektrolytmaterial, vorzugsweise in einer Gesamtmenge von 1 Masse-% bis 50 Masse-%, bevorzugter von 3 Masse-% bis 30 Masse-%, bezogen auf die Gesamtmasse der Elektrode,
E3) optional elektronenleitenden Kohlenstoff, vorzugsweise ausgewählt aus der Gruppe bestehend aus Kohlenstoffnanofasern, Kohlenstoffnanoröhren, Graphen, Ruß, Acetylenruß und Koks,
E4) optional ein oder mehrere Bindemittel.

11. Verfahren zur Herstellung eines beschichteten partikulären Materials wie in einem der Ansprüche 1 bis 9 definiert, umfassend die Schritte
P1) Herstellen oder Bereitstellen einer Vielzahl von Kernpartikeln C1) wie in Anspruch 1 definiert,
P2) Herstellen oder Bereitstellen einer oder mehrerer Verbindungen der Formel (II) wie in Anspruch 1 definiert,
P3) Inkontaktbringen der in den Schritten P1) und P2) hergestellten oder bereitgestellten Materialien miteinander, so dass ein beschichtetes partikuläres Vorläufermaterial entsteht, wobei das beschichtete partikuläre Vorläufermaterial umfasst
CP1) eine Vielzahl von Kernpartikeln C1) wie in Anspruch 1 definiert und
CP2) auf den Oberflächen der Kernpartikel angeordnet, eine Beschichtung umfassend eine oder mehrere Verbindungen der Formel (II) wie in Anspruch 1 definiert
P4) Wärmebehandlung des aus Schritt P3) resultierenden beschichteten partikulären Vorläufermaterials unter einer oxidierenden Atmosphäre bei einer Temperatur im Bereich von 100 °C bis 700 °C, so dass ein beschichtetes partikuläres Material wie in einem der Ansprüche 1 bis 9 definiert entsteht.

12. Verfahren nach Anspruch 11, wobei
- die eine oder mehreren Verbindungen der Formel (II) wie in Anspruch 1 definiert, die in Schritt P2) hergestellt oder bereitgestellt werden, ausgewählt sind aus der Gruppe bestehend aus
Lithiumsulfid,
Lithiumhalogensulfiden,
Lithiumthiophosphaten,
Lithiumhalogenthiophosphaten,
mit einem oder mehreren Sulfiden von Elementen ausgewählt aus der Gruppe bestehend aus B, Al, Si, Ge, Sn, Sb, Zr, Ga, Zn und Mg modifiziertem Lithiumsulfid,
mit einem oder mehreren Sulfiden von Elementen ausgewählt aus der Gruppe bestehend aus B, Al, Si, Ge, Sn, Sb, Zr, Ga, Zn und Mg modifizierten Lithiumhalogensulfiden,
mit einem oder mehreren Sulfiden von Elementen ausgewählt aus der Gruppe bestehend aus B, Al, Si, Ge, Sn, Sb, Zr, Ga, Zn und Mg modifizierten Lithiumthiophosphaten,
und mit einem oder mehreren Sulfiden von Elementen ausgewählt aus der Gruppe bestehend aus B, Al, Si, Ge, Sn, Sb, Zr, Ga, Zn und Mg modifizierten Lithiumhalogenthiophosphaten,
und/oder
- in Schritt P3) das Inkontaktbringen der in den Schritten P1) und P2) hergestellten oder bereitgestellten Materialien ein Mischen der genannten Materialien umfasst, vorzugsweise mittels
- Kugelmahlen oder Hochschermischen der Kernpartikel C1) mit einem Trockenpulver einer oder mehrerer Verbindungen der Formel (I)
- Aufsprühen einer Aufschlämmung oder Lösung einer oder mehrerer Verbindungen der Formel (II) auf die Kernpartikel C1) und Verdampfen des Lösungsmittels der Lösung bzw. der Träger-
flüssigkeit der Aufschlämmung
- Mischen von Kernpartikeln C1) mit einer Aufschlämmung oder Lösung einer oder mehrerer Verbindungen der Formel (II) und Verdampfen des Lösungsmittels der Lösung bzw. der Trägerflüssigkeit der Aufschlämmung
und/oder
in Schritt P4) die Wärmebehandlung in Gegenwart eines Sauerstoffstroms oder eines Luftstroms durchgeführt wird.

13. Verfahren nach Anspruch 11 oder 12, wobei
ein oder mehrere Materialien ausgewählt aus der Gruppe bestehend aus Lithiumcarbonat Li₂CO₃, Lithiumoxid Li₂O, Lithiumhydroxid LiOH, Lithiumperoxid Li₂O₂ und Lithiumternären Oxiden
den in Schritt P2) bereitgestellten einen oder mehreren Verbindungen beigemischt wird.

14. Eine elektrochemische Zelle, umfassend
- ein beschichtetes partikuläres Material wie in einem der Ansprüche 1 bis 9 definiert oder durch ein Verfahren nach einem der Ansprüche 11 bis 13 erhalten,
oder
- eine Elektrode wie in Anspruch 10 definiert.

15. Verwendung eines beschichteten partikulären Materials nach einem der Ansprüche 1 bis 9 oder erhalten durch ein Verfahren nach einem der Ansprüche 11 bis 13 zur Herstellung einer Elektrode wie in einem der Ansprüche 10 und 11 definiert.

## Revendications

1. Un matériau particulaire revêtu comprenant
C1) une pluralité de particules cœur, chaque particule cœur comprenant un ou plusieurs composés de formule (I) :
Li₁+ₜ[NiₓCo_{y}Mn_{z}Mu]₁₋ₜO₂ (I)
où $0 \leq x \leq 1$ $0 \leq y \leq 1$ $0 \leq z \leq 1$ $0 \leq u \leq 0.15$$x + y + z > 0$ $x + y + z + u = 1$ $0 \leq t \leq 0.2$ M, si présent, est un ou plusieurs éléments sélectionnés dans le groupe constitué de Al, Mg, Ba, B, Mo, Ti, Nb, W, Zr,
et
C2) disposé sur les surfaces des particules cœur, un revêtement
- comprenant des cations lithium, et
- des espèces soufrées oxygénées, lesdites espèces soufrées oxygénées étant des produits d'oxydation d'un ou plusieurs composés de formule (II)
(Li₂S)a(P₂S₅)b(LiX)_{c}(Q_{2/e}S)_{d} (II)
où
X correspond à un ou plusieurs éléments sélectionnés dans le groupe constitué de F, Cl, Br et I, et des pseudohalogénures sélectionnés dans le groupe constitué de N₃⁻, SCN⁻, CN⁻, OCN⁻, BF⁻ et BH⁻,
Q correspond à un ou plusieurs éléments sélectionnés dans le groupe constitué de B, Al, Si, Ge, Sn, Sb, Zr, Ga, Zn et Mg,
e est le nombre d'oxydation de Q, $0 \leq a \leq 1$
$0 \leq b < 1 ,$ de préférence 0 ≤ b < 0,98
$0 \leq c < 1 ,$ de préférence 0 ≤ c < 0,98
$0 \leq d < 1 ,$ de préférence 0 ≤ d < 0,98 $a + b + c + d = 1$
à condition que lorsque a = 0,
- c est > 0, de préférence ≥ 0,02
- et l'un de b et d est > 0, de préférence ≥ 0,02.

2. Matériau particulaire revêtu selon la revendication 1, dans lequel le composé de formule (II) est choisi dans le groupe constitué du
sulfure de lithium,
des halosulfures de lithium, des
thiophosphates de lithium,
des halothiophosphates de lithium,
du sulfure de lithium modifié avec un ou plusieurs sulfures d'éléments Q choisis dans le groupe constitué de B, AI, Si, Ge, Sn, Sb, Zr, Ga, Zn et Mg,
des halosulfures de lithium modifiés avec un ou plusieurs sulfures d'éléments Q choisis dans le groupe constitué de B, AI, Si, Ge, Sn, Sb, Zr, Ga, Zn et Mg,
des thiophosphates de lithium modifiés avec un ou plusieurs sulfures d'éléments Q choisis dans le groupe constitué de B, AI, Si, Ge, Sn, Sb, Zr, Ga, Zn et Mg,
et des halothiophosphates de lithium modifiés avec un ou plusieurs sulfures d'éléments Q choisis dans le groupe constitué de B, AI, Si, Ge, Sn, Sb, Zr, Ga, Zn et Mg.

3. Matériau particulaire revêtu selon la revendication 1 ou 2, dans lequel lesdites espèces soufrées oxygénées comprennent des anions sulfate, dans lequel au moins une partie des anions sulfate, de préférence la totalité des anions sulfate, dans le revêtement est présente sous forme de sulfate de lithium Li₂SO₄.

4. Matériau particulaire revêtu selon l'une quelconque des revendications précédentes, dans lequel ledit revêtement comprend en outre des espèces phosphorées oxygénées, dans lequel lesdites espèces phosphorées oxygénées sont des produits d'oxydation d'un ou plusieurs composés de formule (II) dans lequel b > 0.

5. Matériau particulaire revêtu selon la revendication 4, dans lequel lesdites espèces phosphorées oxygénées sont des produits d'oxydation d'un ou plusieurs composés du groupe constitué de
thiophosphates de lithium,
halothiophosphates de lithium,
thiophosphates de lithium et halothiophosphates de lithium modifiés avec des sulfures d'éléments Q sélectionnés dans le groupe constitué de B, Al, Si, Ge, Sn, Sb, Zr, Ga, Zn et Mg.

6. Matériau particulaire revêtu selon la revendication 4 ou 5, dans lequel lesdites espèces phosphate oxygénées comprennent des anions phosphate dans lesquels au moins une partie des anions phosphate anions, de préférence la quantité totale d'anions phosphate, dans le revêtement est présente sous forme de phosphate de lithium Li₃PO₄.

7. Matériau particulaire revêtu selon l'une quelconque des revendications précédentes, dans lequel
- la fraction de soufre est dans la plage de 0,09 % à 10,0 %, de préférence de 0,4 % à 4,0 %, telle que détectée par spectrométrie d'émission optique à plasma à couplage inductif spectrométrie
et/ou
- la fraction de phosphore est dans la plage de 0,01 % à 10,0 %, de préférence 0,05 % à 4,0 % telle que détectée par spectrométrie d'émission optique à plasma à couplage inductif
dans chaque cas par rapport à la masse totale de la pluralité de particules cœur C1) et de leurs revêtements C2).

8. Matériau particulaire revêtu selon l'une quelconque des revendications précédentes, dans lequel ledit revêtement comprend Li₃PO₄ et Li₂SO₄.

9. Matériau particulaire revêtu selon l'une quelconque des revendications précédentes, dans lequel ledit revêtement comprend en outre un ou plusieurs parmi
- des anions halogénure, dans lesquels au moins une partie des anions halogénure, de préférence la quantité totale d'anions halogénure dans le revêtement est présente sous forme d'halogénure de lithium,
- des anions carbonate, dans lesquels au moins une partie des anions carbonate, de préférence la quantité totale d'ions carbonate dans le revêtement est présente sous forme de carbonate de lithium,
- des anions sélectionnés dans le groupe constitué d'anions oxyde, d'anions hydroxyde et d'anions peroxyde, dans lesquels au moins une partie desdits anions, de préférence la quantité totale desdits anions dans le revêtement est présente sous forme d'un ou plusieurs parmi l'oxyde de lithium Li₂O, l'hydroxyde de lithium LiOH et le peroxyde de lithium Li₂O₂,
- des oxoanions d'éléments du groupe constitué de B, Al, Si, Ge, Sn, Sb, Zr, Ga, Zn et Mg, dans lesquels au moins une partie des oxoanions, de préférence la quantité totale des oxoanions dans le revêtement est présente sous forme d'un oxyde mixte de lithium et dudit un ou plusieurs éléments du groupe constitué de B, Al, Si, Ge, Sn, Sb, Zr, Ga, Zn et Mg.

10. Électrode destinée à être utilisée dans une cellule électrochimique lithium-ion à l'état solide et/ou dans une cellule électrochimique lithium-ion tout-solide, comprenant
E1) un matériau particulaire revêtu tel que défini dans l'une quelconque des revendications 1 à 9, de préférence en une quantité totale allant de 50 % en masse à 99 % en masse, plus préférablement de 70 % en masse à 97 % en masse, par rapport à la masse totale de l'électrode,
E2) un matériau électrolyte solide conducteur d'ions lithium, de préférence en une quantité totale allant de 1 % en masse à 50 % en masse, plus préférablement de 3 % en masse à 30 % en masse, par rapport à la masse totale de l'électrode,
E3) optionnellement du carbone conducteur d'électrons, de préférence choisi dans le groupe constitué des nanofibres de carbone, des nanotubes de carbone, du graphène, du noir de carbone, du noir d'acétylène et du coke,
E4) optionnellement un ou plusieurs agents liants.

11. Procédé de préparation d'un matériau particulaire revêtu tel que défini dans l'une quelconque des revendications 1 à 9, comprenant les étapes
P1) préparer ou fournir une pluralité de particules cœur C1) telles que définies dans la revendication 1,
P2) préparer ou fournir un ou plusieurs composés de formule (II) tels que définis dans la revendication 1,
P3) mettre en contact les matériaux préparés ou fournis aux étapes P1) et P2) l'un avec l'autre, de sorte qu'il en résulte un matériau précurseur particulaire revêtu, ledit matériau précurseur particulaire revêtu comprenant
CP1) une pluralité de particules cœur C1) telles que définies dans la revendication 1 et
CP2) disposé sur les surfaces des particules cœur, un revêtement comprenant un ou plusieurs composés de formule (II) tels que définis dans la revendication 1
P4) traiter thermiquement le matériau précurseur particulaire revêtu résultant de l'étape P3) sous une atmosphère oxydante à une température allant de 100 °C à 700 °C, de sorte qu'il en résulte un matériau particulaire revêtu tel que défini dans l'une quelconque des revendications 1 à 9.

12. Procédé selon la revendication 11, dans lequel
- le ou les composés de formule (II) tels que définis dans la revendication 1 préparés ou fournis à l'étape P2) sont choisis dans le groupe constitué de
sulfure de lithium,
halosulfures de lithium,
thiophosphates de lithium,
halothiophosphates de lithium,
sulfure de lithium modifié avec un ou plusieurs sulfures d'éléments choisis dans le groupe constitué de B, Al, Si, Ge, Sn, Sb, Zr, Ga, Zn et Mg,
halosulfures de lithium modifiés avec un ou plusieurs sulfures d'éléments choisis dans le groupe constitué de B, Al, Si, Ge, Sn, Sb, Zr, Ga, Zn et Mg,
thiophosphates de lithium modifiés avec un ou plusieurs sulfures d'éléments choisis dans le groupe constitué de B, Al, Si, Ge, Sn, Sb, Zr, Ga, Zn et Mg,
et halothiophosphates de lithium modifiés avec un ou plusieurs sulfures d'éléments choisis dans le groupe constitué de B, Al, Si, Ge, Sn, Sb, Zr, Ga, Zn et Mg,
et/ou
- à l'étape P3), la mise en contact des matériaux préparés ou fournis aux étapes P1) et P2) comprend le mélange desdits matériaux, de préférence au moyen de
- broyage en billes ou mélange à cisaillement élevé des particules de cœur C1) avec une poudre sèche d'un ou plusieurs composés de formule (I)
- pulvérisation d'une suspension ou d'une solution d'un ou plusieurs composés de formule (II) sur les particules de cœur C1, et évaporation du solvant de la solution resp. le liquid porteur de la suspension
- mélange des particules de cœur C1) avec une suspension ou une solution d'un ou plusieurs composés de formule (II), et évaporation du solvant de la solution resp. le liquide porteur de la suspension
et/ou
à l'étape P4), le traitement thermique est effectué en présence d'un flux d'oxygène ou d'un flux d'air.

13. Procédé selon la revendication 11 ou 12, dans lequel
un ou plusieurs matériaux choisis dans le groupe constitué du carbonate de lithium Li₂CO₃, de l'oxyde de lithium Li₂O, de l'hydroxyde de lithium LiOH, du peroxyde de lithium Li₂O₂, et du lithium oxydes ternaires
est mélangé au(x) composé(s) fourni(s) à l'étape P2).

14. Une cellule électrochimique comprenant
- un matériau particulaire revêtu tel que défini dans l'une quelconque des revendications 1 à 9 ou obtenu par un procédé selon l'une quelconque des revendications 11 à 13,
ou
- une électrode telle que définie dans la revendication 10.

15. Utilisation d'un matériau particulaire revêtu selon l'une quelconque des revendications 1 à 9 ou obtenu par un procédé selon l'une quelconque des revendications 11 à 13 pour préparer une électrode telle que définie dans l'une quelconque des revendications 10 et 11.
